(19) Europäisches Patentamt
European Patent Office
Office européen des brevets

(11) **EP 4 543 078 A1**

(12) **EUROPEAN PATENT APPLICATION**
published in accordance with Art. 153(4) EPC

(43) Date of publication:
**23.04.2025 Bulletin 2025/17**

(21) Application number: **23823209.4**

(22) Date of filing: **15.06.2023**

(51) International Patent Classification (IPC):
*H04W 24/10* (2009.01)

(52) Cooperative Patent Classification (CPC):
**H04B 7/022; H04B 7/0456; H04B 7/06;
H04B 17/30; H04B 17/382; H04L 5/00; H04W 24/10**

(86) International application number:
**PCT/CN2023/100352**

(87) International publication number:
**WO 2023/241643 (21.12.2023 Gazette 2023/51)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.06.2022 CN 202210681219**

(71) Applicant: **Vivo Mobile Communication Co., Ltd.
Dongguan, Guangdong 523863 (CN)**

(72) Inventors:
• **YUAN, Jiangwei
Dongguan, Guangdong 523863 (CN)**
• **WU, Hao
Dongguan, Guangdong 523863 (CN)**

(74) Representative: **Lavoix
Bayerstraße 83
80335 München (DE)**

(54) **PMI PARAMETER FEEDBACK METHOD FOR JOINT TRANSMISSION, AND TERMINAL AND NETWORK-SIDE DEVICE**

(57) This application pertains to the field of wireless communication, and discloses a PMI parameter feedback method for joint transmission, a terminal, and a network-side device. The PMI parameter feedback method for joint transmission in embodiments of this application includes: performing, by a terminal, channel measurement based on M target resources configured by a network-side device, where the target resources include measurement resources or a measurement resource group, and M is an integer greater than 1; obtaining, by the terminal, a first PMI parameter of an $i^{th}$ target resource based on a channel measurement result of the $i^{th}$ target resource among the M target resources, where i = 1, 2, ..., N, N is an integer less than or equal to M, and the first PMI parameter includes at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and sending, by the terminal, the first PMI parameter of the $i^{th}$ target resource.

200

A terminal performs channel measurement based on M target resources configured by a network-side device, where the target resources include measurement resources or a measurement resource group — S210

The terminal obtains a first PMI parameter of an $i^{th}$ target resource based on a channel measurement result of the $i^{th}$ target resource among the M target resources — S212

The terminal sends the first PMI parameter of the $i^{th}$ target resource — S214

FIG. 2

**Description**

**CROSS-REFERENCE TO RELATED APPLICATIONS**

This application claims priority to Chinese Patent Application No. 202210681219.7, filed with the China National Intellectual Property Administration on June 16, 2022 and entitled "PMI PARAMETER FEEDBACK METHOD FOR JOINT TRANSMISSION, TERMINAL, AND NETWORK-SIDE DEVICE", which is incorporated herein by reference in its entirety.

**TECHNICAL FIELD**

This application pertains to the field of wireless communication technologies, and specifically relates to a PMI parameter feedback method for joint transmission, a terminal, and a network-side device.

**BACKGROUND**

Coordinated multiple points (Coordinated Multiple Points, CoMP) transmission means that multiple geographically separated transmission and reception points (Transmission Reception Point, TRP) cooperatively participate in data transmission for a terminal or jointly receive data sent by a terminal. The multiple transmission points participating in cooperation usually refer to base stations in different cells. Multiple cell base stations in cooperation can use interference signals as wanted signals, thereby reducing interference between cells and improving spectrum utilization of a system.

Each common CoMP scheme may be classified into one of the following categories: joint processing (Joint Processing, JP) or collaborative scheduling (collaborative scheduling, CS) or coordinated beamforming (Coordinated Beamforming, CB).

Joint processing (JP) means that data of a terminal (User Equipment, UE) is available at more than one time-frequency resource point in a CoMP cooperation set. Joint processing includes:

(1) Joint transmission (Joint Transmission, JT). For example, data is simultaneously transmitted from multiple points (a part of the CoMP cooperation set or the entire CoMP cooperation set) to one UE or multiple UEs in a time-frequency resource. Alternatively, data is simultaneously transmitted from multiple points to UE, for example, to improve received signal quality and/or a data throughput (coherently or incoherently).

(2) Dynamic point selection (Dynamic Point Selection, DPS) or frequency modulation. Data transmission is performed from one point (in the CoMP cooperation set) in a time-frequency resource. A transmission/mixing point may be changed from one subframe to another subframe, including a change of an RB pair in a subframe. Data is available at multiple points simultaneously. The dynamic point selection or frequency modulation may include dynamic cell selection (DCS).

(3) A combination of DPS and JT. In this case, multiple points may be selected from a time-frequency resource for data transmission. Collaborative scheduling or coordinated beamforming (CS/CB) means that for a time-frequency resource, data of UE is available only at one point in the CoMP cooperation set and is transmitted from the point (DL data transmission starts from this point), but a decision on user scheduling/beamforming is coordinated among corresponding points in the CoMP cooperation set. Selection of a transmission point is semi-static, that is, semi-static point selection (SSPS). In other words, the transmission point can be changed only in a semi-static manner every time transmission is performed from one point to a specific UE.

In the related art, considering a problem of precoding matrix indicator (Precoding matrix indicator, PMI) feedback overheads, frequency domain compression is added in a codebook design, and a highest rank (Rank) supported is extended to 4. In addition, a bitmap mode is added to indicate distribution of non-zero coefficients in PMI feedback. Codebook generation at each layer may be expressed by using the following formula:

$$W = W_1 \widetilde{W}_2 W_f^H,$$

where $W_1 = \begin{bmatrix} v_0 v_1 \dots v_{L-1} & 0 \\ 0 & v_0 v_1 \dots v_{L-1} \end{bmatrix}$, $v_i$, $i \in \{0,1, ..., L$ - $1\}$ represents a DFT beam vector with $N_1 N_2 \times 1$ dimensions $v_i$, $i \in \{0,1, ..., L$ - $1\}$; and

$$\widetilde{W}_2 = \begin{bmatrix} p_0^{(1)} & \cdots & 0 \\ \vdots & \ddots & \vdots \\ 0 & \cdots & p_{2L-1}^{(1)} \end{bmatrix} \begin{bmatrix} p_{0,0}^{(2)}\varphi_{0,0} & \cdots & p_{0,Mv-1}^{(2)}\varphi_{0,Mv-1} \\ \vdots & \ddots & \vdots \\ p_{2L-1,0}^{(2)}\varphi_{2L-1,0} & \cdots & p_{2L-1,Mv-1}^{(2)}\varphi_{2L-1,Mv-1} \end{bmatrix},$$

where values of $p_i^{(1)}$, $i \in \{0,1,...,L-1\}$ are the same, and $p_i^{(1)}$, $i \in \{0,1,...,L-1\}$ are amplitude coefficients in polarization direction $r = 0$; values of $p_i^{(1)}$, $i \in \{L, L+1, ...,2L-1\}$ are the same, and $p_i^{(1)}$, $i \in \{L,L+1,...,2L-1\}$ are amplitude coefficients in polarization direction $r = 1$; $p_{i,m}^{(2)}$ and $\varphi_{i,m}$ are an amplitude coefficient and a phase coefficient corresponding to tap m of beam $i$; and $W_f = [f_0 f_1 ... f_{Mv}-1]$, $f_i$, $i \in \{0,1,...,Mv-1\}$ represents a DFT vector with $1 \times N_3$ dimensions. When a terminal feeds back a PMI, the terminal feeds back codebook coefficients used to obtain or indicate $W_1$, $\tilde{W}_2$, and $W_f$.

However, current codebook parameter definitions and parameter values are mainly intended for a PMI of one channel measurement resource (associated with one TRP) configured by a network-side device. Therefore, the PMI parameter feedback method in the related art is not applicable to a scenario in which the network-side device configures a plurality of channel measurement resources (associated with multiple TRPs).

## SUMMARY

Embodiments of this application provide a PMI parameter feedback method for joint transmission, a terminal, and a network-side device to resolve a problem that a PMI parameter feedback method in the related art is not applicable to a scenario in which a network-side device configures a plurality of channel measurement resources.

According to a first aspect, a PMI parameter feedback method for joint transmission is provided. The method includes: performing, by a terminal, channel measurement based on M target resources configured by a network-side device, where the target resources include measurement resources or a measurement resource group, and M is an integer greater than 1; obtaining, by the terminal, a first PMI parameter of an $i^{th}$ target resource based on a channel measurement result of the $i^{th}$ target resource among the M target resources, where i = 1, 2, ..., N, N is an integer less than or equal to M, and the first PMI parameter includes at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and sending, by the terminal, the first PMI parameter of the $i^{th}$ target resource.

According to a second aspect, a PMI parameter feedback apparatus for joint transmission is provided. The apparatus includes: a measurement module, configured to perform channel measurement based on M target resources configured by a network-side device, where the target resources include measurement resources or a measurement resource group, and M is an integer greater than 1; a first obtaining module, configured to obtain a first PMI parameter of an $i^{th}$ target resource based on a channel measurement result of the $i^{th}$ target resource among the plurality of target resources, where i = 1, 2, ..., N, N is an integer less than or equal to M, and the first PMI parameter includes at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and a sending module, configured to send the first PMI parameter of the $i^{th}$ target resource.

According to a third aspect, a PMI obtaining method for joint transmission is provided and applied to a network-side device. The method includes: obtaining, by the network-side device, a first PMI parameter that is of an $i^{th}$ target resource and that is sent by a terminal, where i = 1, 2, ..., N, N is an integer less than or equal to M, M is a quantity of target resources configured by the network-side device for the terminal, and the first PMI parameter includes at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and obtaining, by the network-side device, a PMI for joint transmission based on the first PMI parameter.

According to a fourth aspect, a PMI obtaining apparatus for joint transmission is provided. The apparatus includes: a second obtaining module, configured to obtain a first PMI parameter that is of an $i^{th}$ target resource and that is sent by a terminal, where i = 1, 2, ..., N, N is an integer less than or equal to M, M is a quantity of target resources configured by the network-side device for the terminal, and the first PMI parameter includes at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and a third obtaining module, configured to obtain a PMI for joint transmission based on the first PMI parameter.

According to a fifth aspect, a terminal is provided. The terminal includes a processor and a memory. The memory stores a program or instructions capable of running on the processor. When the program or instructions are executed by the processor, the steps of the method according to the first aspect are implemented.

According to a sixth aspect, a terminal is provided and includes a processor and a communication interface. The processor is configured to implement the steps of the method according to the first aspect. The communication interface is configured to communicate with an external device.

According to a seventh aspect, a network-side device is provided. The network-side device includes a processor and a memory. The memory stores a program or instructions capable of running on the processor. When the program or instructions are executed by the processor, the steps of the method according to the third aspect are implemented.

According to an eighth aspect, a network-side device is provided and includes a processor and a communication interface. The processor is configured to implement the steps of the method according to the third aspect. The communication interface is configured to communicate with an external device.

According to a ninth aspect, a PMI obtaining system for joint transmission is provided and includes a terminal and a network-side device. The terminal may be configured to perform the steps of the method according to the first aspect. The network-side device may be configured to perform the steps of the method according to the third aspect.

According to a tenth aspect, a readable storage medium is provided. The readable storage medium stores a program or instructions. When the program or instructions are executed by a processor, the steps of the method according to the first aspect are implemented, or the steps of the method according to the third aspect are implemented.

According to an eleventh aspect, a chip is provided. The chip includes a processor and a communication interface. The communication interface is coupled to the processor. The processor is configured to run a program or instructions to implement the steps of the method according to the first aspect or implement the steps of the method according to the third aspect.

According to a twelfth aspect, a computer program or program product is provided. The computer program or program product is stored in a storage medium. The computer program or program product is executed by at least one processor to implement the steps of the method according to the first aspect or implement the steps of the method according to the third aspect.

In the embodiments of this application, the terminal performs channel measurement based on the M target resources configured by the network-side device; then obtains a first PMI parameter of each target resource among the N target resources based on channel measurement results of the M target resources, where the first PMI parameter includes but is not limited to at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and then feeds back the obtained first PMI parameter of the target resource. Therefore, the terminal can feed back the PMI parameter based on channel measurement information of each target resource in a scenario in which the network-side device may configure a plurality of target resources.

**BRIEF DESCRIPTION OF DRAWINGS**

FIG. 1 is a block diagram of a wireless communication system to which an embodiment of this application may be applied;
FIG. 2 is a schematic flowchart of a PMI parameter feedback method for joint transmission according to an embodiment of this application;
FIG. 3 is a schematic flowchart of a PMI obtaining method for joint transmission according to an embodiment of this application;
FIG. 4 is a schematic diagram of a structure of a PMI parameter feedback apparatus for joint transmission according to an embodiment of this application;
FIG. 5 is a schematic diagram of a structure of a PMI obtaining apparatus for joint transmission according to an embodiment of this application;
FIG. 6 is a schematic diagram of a structure of a communication device according to an embodiment of this application;
FIG. 7 is a schematic diagram of a hardware structure of a terminal according to an embodiment of this application; and
FIG. 8 is a schematic diagram of a hardware structure of a network-side device according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by a person of ordinary skill in the art based on the embodiments of this application shall fall within the protection scope of this application.

The terms "first", "second", and the like in this specification and claims of this application are used to distinguish between similar objects instead of describing a specific order or sequence. It should be understood that the terms used in this way are interchangeable in appropriate circumstances, so that the embodiments of this application can be implemented in other orders than the order illustrated or described herein. In addition, objects distinguished by "first" and "second" usually fall within one class, and a quantity of objects is not limited. For example, there may be one or more first objects. In addition, the term "and/or" in the specification and claims indicates at least one of connected objects, and the character "/" generally represents an "or" relationship between associated objects.

It should be noted that technologies described in the embodiments of this application are not limited to a long term evolution (Long Term Evolution, LTE)/LTE-Advanced (LTE-Advanced, LTE-A) system, and can also be used in other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are usually used interchangeably. The described technologies may be used for the foregoing systems and radio technologies, and may also be used for other systems and radio technologies. However, in the following descriptions, the new radio (New Radio, NR) system is described for an illustrative purpose, and NR terms are used in most of the following descriptions. These technologies may also be applied to other applications than an NR system application, for example, a 6th Generation (6th Generation, 6G) communication system.

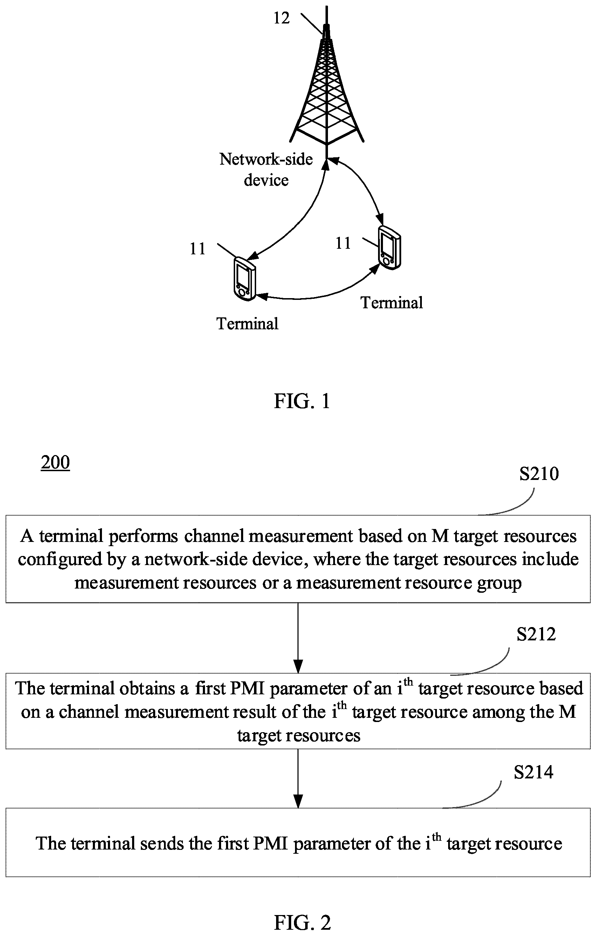

FIG. 1 is a block diagram of a wireless communication system to which an embodiment of this application may be applied. The wireless communication system includes a terminal 11 and a network-side device 12. The terminal 11 may be a terminal-side device such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR) or virtual reality (virtual reality, VR) device, a robot, a wearable device (Wearable Device), vehicle user equipment (Vehicle User Equipment, VUE), pedestrian user equipment (Pedestrian User Equipment, PUE), a smart home (a home device having a wireless communication function, such as a refrigerator, a television, a washing machine, or furniture), a game console, a personal computer (personal computer, PC), a teller machine, or a self-service machine. The wearable device includes a smartwatch, a smart band, a smart headphone, smart glasses, smart jewelry (a smart bracelet, a smart wrist chain, a smart ring, a smart necklace, a smart anklet, a smart ankle chain, or the like), a smart wristband, smart clothing, or the like. It should be noted that a specific type of the terminal 11 is not limited in the embodiments of this application. The network-side device 12 may include an access network device and/or a core network device. The access network device 12 may also be referred to as a radio access network device, a radio access network (Radio Access Network, RAN), a radio access network function, or a radio access network element. The access network device 12 may include a base station, a wireless local area network (Wireless Local Area Network, WLAN) access point, a Wireless Fidelity (Wireless Fidelity, Wi-Fi) node, or the like. The base station may be referred to as a NodeB, an evolved NodeB (Evolved NodeB, eNB), an access point, a base transceiver station (Base Transceiver Station, BTS), a radio base station, a radio transceiver, a basic service set (Basic Service Set, BSS), an extended service set (Extended Service Set, ESS), a home NodeB, a home evolved NodeB, a transmission and reception point (Transmission Reception Point, TRP), or another appropriate term in the art. As long as the same technical effect is achieved, the base station is not limited to specific technical terms. It should be noted that in the embodiments of this application, only a base station in an NR system is used as an example for description, but a specific type of the base station is not limited.

In the related art, an R16 type II codebook is designed based on a principle of a beam combination. Considering a problem of PMI feedback overheads, frequency domain compression is added in the R16 type II codebook design, and a highest rank supported is extended to 4. In addition, a bitmap mode is added to indicate distribution of non-zero coefficients in PMI feedback.

Codebook generation at each layer may be expressed by using the following formula:

$$W = W_1 \widetilde{W}_2 W_f^H,$$

$$W_1 = \begin{bmatrix} v_0 v_1 \ldots v_{L-1} & 0 \\ 0 & v_0 v_1 \ldots v_{L-1} \end{bmatrix}$$

where , $v_i$, $i \in \{0,1, \ldots, L - 1\}$ represents a DFT beam vector with $N_1 N_2 \times 1$ dimensions; and

$$\widetilde{W}_2 = \begin{bmatrix} p_0^{(1)} & \cdots & 0 \\ \vdots & \ddots & \vdots \\ 0 & \cdots & p_{2L-1}^{(1)} \end{bmatrix} \begin{bmatrix} p_{0,0}^{(2)} \varphi_{0,0} & \cdots & p_{0,Mv-1}^{(2)} \varphi_{0,Mv-1} \\ \vdots & \ddots & \vdots \\ p_{2L-1,0}^{(2)} \varphi_{2L-1,0} & \cdots & p_{2L-1,Mv-1}^{(2)} \varphi_{2L-1,Mv-1} \end{bmatrix},$$

where values of $p_i^{(1)}$, $i \in \{0,1, \ldots, L-1\}$ are the same, and are amplitude coefficients in polarization direction r = 0; values of $p_i^{(1)}$, $i \in \{L, L+1, \ldots, 2L-1\}$ are the same, and are amplitude coefficients in polarization direction $r = 1$; $p_{i,m}^{(2)}$ and $\varphi_{i,m}$ are an amplitude coefficient and a phase coefficient corresponding to tap $m$ of beam $i$; and $W_f = [f_0 f_1 \ldots f_{Mv-1}]$, $f_i$, $i \in \{0,1, \ldots, Mv-1\}$ represents a DFT vector with $1 \times N_3$ dimensions.

A terminal may feed back, in a PMI, codebook coefficients used to obtain or indicate $W_1$, $\tilde{W}_2$, and $W_f$, and a network-side device may obtain $W_1$, $\tilde{W}_2$, and $W_f$ based on the PMI fed back by the terminal.

Currently, parameters of PMI coefficients fed back by the terminal include $i_1$ and $i_2$, where $i_1$ includes $i_{1,1}$, $i_{1,2}$, $i_{1,5}$, $i_{1,6,l}$, $i_{1,7,l}$, and $i_{1,8,l}$, and $i_2$ includes $i_{2,3,l}$, $i_{2,4,l}$, and $i_{2,5,l}$, where $l$ indicates a corresponding transmission layer, for example, $l$ = one or more of 1, 2, 3, and 4. For example, if an RI value is 2, $l$ = 1, 2; or if an RI value is 4, l = 1, 2, 3, 4.

$i_{1,1}$ is used to indicate a sequence number of an orthogonal DFT vector group, and is equal to $[q_1, q_2]$, where $q_1 \in \{0,1, \cdots, O_1 - 1\}$, $q_2 \in \{0,1, \cdots, O_2 - 1\}$, and $O_1$, $O_2$ are over-sampling factors configured by a network.

$i_{1,2}$ is used to indicate sequence numbers of $L$ vectors in the orthogonal $DFT$ vector group indicated by $i_{1,1}$, and is equal to $i_{1,2} \in \left\{ 0,1, \cdots, \binom{N1N2}{L} - 1 \right\}$, where $N1$, $N2$ are port quantity parameters configured by the network, $L$ is a quantity of DFT vectors indicated by the network, and $\binom{N1N2}{L}$ represents a combinatorial number of $L$ beams selected from N1N2 beams.

$i_{1,5}$ indicates a start position $M_{initial}$ of a window with a length of $2M_v$, and a value range is $i_{1,5} \in \{0,1, \cdots, 2M_v - 1\}$, where $M_v$ represents a quantity of time domain taps. Note: The coefficient exists only in a case of $N_3 > 19$; when $N_3 \leq 19$, $i_{1,5} = 0$ and the terminal does not need to feed back the coefficient.

$i_{1,6,l}$ is used to indicate locations of $M_v - 1$ tap coefficients fed back by layer l among $N_3 - 1$ tap coefficients, and a value range includes two cases. When $N_3 > 19$, the value range is $i_{1,6,l} \in \left\{ 0,1, \cdots, \binom{2M_v - 1}{M_v - 1} - 1 \right\}$. When $N_3 \leq 19$, the value range is $i_{1,6,l} \in \left\{ 0,1, \cdots, \binom{N_3 - 1}{M_v - 1} - 1 \right\}$. Feedback is performed by using a combinatorial number.

$i_{1,7,l}$ is a non-zero coefficient indicator at layer 1, and is a bit sequence with a length of $2LM_l$.

$i_{1,8,l}$ is a strongest coefficient indicator at layer l, and a value range is $i_{1,8,l} \in \{0, \cdots, 2L - 1\}$, where for transmission with rank = 1, $i_{1,8,l}$ indicates an $i_{1,8,l}^{th}$ non-zero coefficient, and for transmission with a rank greater than 1, $i_{1,8,l}$ indicates an $i_{1,8,l}^{th}$ coefficient.

$i_{2,3,l}$ is a quantization indicator of amplitude coefficients of two polarizations at layer 1. Each amplitude coefficient is a bit string of 4 bits, and each codepoint corresponds to a quantized value, where the amplitude coefficient of the polarization in which the strongest coefficient is located is not fed back, and is assumed to be 1.

$i_{2,4,l}$ is an amplitude coefficient quantization indicator of all tap coefficients at layer 1, each amplitude coefficient is a bit string of 3 bits, and each codepoint corresponds to a quantized value, so that $2LM_v$ amplitude coefficients are obtained in total. An amplitude coefficient of the strongest coefficient is not fed back, and is assumed to be 1. For remaining coefficients, only amplitude coefficients with non-zero amplitudes are fed back. Therefore, for layer 1, a total quantity of coefficients fed back is $K_{N,Z,l} - 1$, where $K_{N,Z,l}$ represents a quantity of coefficients with non-zero amplitudes at layer 1.

$i_{2,5,l}$ is a phase coefficient quantization indicator of all tap coefficients at layer 1, each coefficient is a bit string of 4 bits, and each codepoint corresponds to a quantized value, so that $2LM_v$ phase coefficients are obtained in total. A phase coefficient of the strongest coefficient is not fed back, and is assumed to be 0. For remaining coefficients, only the phase coefficients with non-zero amplitudes are fed back. Therefore, for layer 1, a total quantity of coefficients fed back is $K_{N,Z,l} - 1$, where $K_{NZ,l}$ represents a quantity of coefficients with non-zero amplitudes.

A PMI parameter may be reported by using channel state information (Channel State Information, CSI), and usually a CSI reporting mechanism based on a physical uplink shared channel (Physical Uplink Shared Channel, PUSCH) is used. CSI reporting based on the PUSCH supports type 1 (Type 1) wideband or subband CSI, and also supports type-2 CSI.

For feedback of type 1, type 2, and enhanced type 2 CSI based on the PUSCH, a CSI report (report) includes two parts: part 1 (part 1) and part 2 (part 2), where part 1 has a fixed payload size and also specifies a quantity of information bits in part 2. Note: Part 1 needs to be transmitted completely before part 2.

For feedback of type 1 CSI, part 1 may include one or more of a rank indicator (Rank Indicator, RI), a CSI reference signal (CSI Reference Signal, CSI-RS) resource indicator (CSI-RS Resource Indicator, CRI), and a channel quality indicator (Channel quality indicator, CQI) for a first codeword, and part 2 includes one or more of a PMI and a CQI for a second codeword.

For feedback of type 2 CSI, part 1 includes one or more of an RI, a CQI, and an indicator of non-zero wideband amplitude coefficients per layer for the type 2 CSI, and part 2 includes a PMI of the type 2 CSI.

For feedback of enhanced type 2 CSI, part 1 includes an RI, a CQI, and an indicator of a total quantity of cross-layer coefficients with non-zero amplitudes for the enhanced type 2 CSI, and type 2 includes a PMI of the enhanced type 2 CSI.

For feedback of the enhanced type 2 CSI, a quantity of delays or a quantity of beams to be fed back in a PMI parameter is configured by the network. In a scenario of multi-TRP joint transmission, feedback overheads of a terminal in obtaining type 2 CSI increase obviously. If the quantity of delays or the quantity of beams configured on a network side is excessively large, the feedback overheads may further increase. However, if the quantity of delays or the quantity of beams configured on the network side is excessively small, accuracy of a PMI fed back by UE is affected.

A PMI parameter feedback method for joint transmission according to embodiments of this application is hereinafter described in detail by using some embodiments and application scenarios thereof with reference to the accompanying drawings.

FIG. 2 is a schematic flowchart of a PMI parameter feedback method for joint transmission according to an embodiment of this application. The method 200 may be performed by a terminal. In other words, the method may be performed by software or hardware installed on the terminal. As shown in FIG. 2, the method may include the following steps.

S210. A terminal performs channel measurement based on M target resources configured by a network-side device, where the target resources include measurement resources or a measurement resource group, and M is an integer greater than 1.

In a joint transmission scenario, the network-side device may configure a plurality of target resources for the terminal, where each target resource may be associated with a TRP or a TRP group. By measuring the target resource, the terminal may obtain channel information of the TRP or TRP group associated with the target resource. For example, through a multi-TRP (MTRP) CSI report configuration, the network-side device may configure or associate target resources to be measured for UE.

In this embodiment of this application, the target resources may include the measurement resources or the measurement resource group, where a measurement resource may be a CSI-RS resource, or a plurality of CSI-RS ports of a CSI-RS resource, or a group of CSI-RS ports, and one measurement resource group may include at least one measurement resource.

S212. The terminal obtains a first PMI parameter of an $i^{th}$ target resource based on a channel measurement result of the $i^{th}$ target resource among the M target resources, where i = 1, 2, ..., N, and N is an integer less than or equal to M.

The $i^{th}$ target resource is an $i^{th}$ target resource among the N target resources.

In this embodiment of this application, selection of the N target resources among the M target resources may depend on a specific implementation of the terminal. For example, the terminal may select, based on channel measurement results of the M target resources, at least one target resource to be fed back, where the quantity N of the selected target resources to be fed back may be the same as or different from the quantity M of the target resources configured by the network-side device. For example, the terminal may determine, based on the channel measurement results of the M target resources, that the N target resources among the M target resources meet a preset condition, and choose to feed back PMI parameters of the N target resources, where a value range of N is 1 to M.

In this embodiment of this application, when N = M, in one case, the terminal chooses to feed back PMI parameters of all the target resources, and in another case, although the terminal selects some of the M target resources, the terminal feeds back PMI parameters of all the target resources during feedback. For some unselected target resources, values of PMI parameters fed back may be a predetermined value, for example, 0.

In this embodiment of this application, the terminal obtains the first PMI parameter of the $i^{th}$ target resource based on the channel measurement result of the $i^{th}$ target resource. The first PMI parameter includes but is not limited to at least one of the following:

(1) A quantity $M_{v,i}$ of basis vectors. In this possible implementation, the terminal may determine the quantity of the basis vectors of the $i^{th}$ target resource based on an actual channel measurement result obtained by measuring the $i^{th}$ target resource, instead of determining the basis vectors based on the configuration of the network-side device, thereby avoiding a problem that feedback overheads are further increased or that accuracy of the PMI coefficient fed back is not high because a quantity of basis vectors configured by the network-side device is excessively large or excessively small.

The quantity $M_{v,i}$ of the basis vectors includes but is not limited to one of the following:

(a) a quantity of spatial domain (which may also be referred to as angular domain) basis vectors, for example, a quantity of pieces of spatial beam indication information included in the PMI parameter fed back by the terminal;
(b) a quantity of frequency domain (which may also be referred to as delay domain) basis vectors, for example, a quantity of pieces of delay domain delay indication information included in the PMI parameter fed back by the terminal; and
(c) a quantity of time domain (which may also be referred to as Doppler domain) basis vectors, for example, a quantity of pieces of time domain Doppler indication information included in the PMI parameter fed back by the terminal.

For example, the terminal may determine, based on a quantity of beams obtained when the $i^{th}$ target resource is measured, a quantity of spatial domain basis vectors to be fed back, instead of determining, based on a quantity of beams configured by the network-side device, a quantity of beams to be fed back, thereby avoiding a problem that overheads of feeding back the PMI parameter are excessive or inaccurate because the quantity of beams configured by the network-side device does not match an actually measured quantity. For example, if the quantity of beams configured by the network-side device is 8, a quantity of pieces of beam information obtained by the terminal through actual measurement is 4, and if feedback is made based on 8, unnecessary overheads are added.

(2) A variation range of basis vectors.

In this possible implementation, the terminal may determine the variation range of the basis vectors of the $i^{th}$ target resource based on an actual channel measurement result obtained by measuring the $i^{th}$ target resource, instead of determining the variation range of the basis vectors based on the configuration of the network-side device, thereby avoiding a problem that the feedback overheads are further increased or that accuracy of the PMI coefficient fed back is not high because a variation range of basis vectors configured by the network-side device is excessively large or excessively small.

(3) A quantity of quantization bits for an amplitude of a coefficient.

In this possible implementation, the terminal may determine the amplitude of the coefficient of the $i^{th}$ target resource based on an actual channel measurement result obtained by measuring the $i^{th}$ target resource, and may select different quantities of quantization bits for different coefficients based on magnitudes or distribution of amplitudes of coefficients. This can further reduce the feedback overheads as compared with using only one quantity of quantization bits.

(4) A quantization table for an amplitude of a coefficient.

In this possible implementation, the terminal may determine the amplitude of the coefficient of the $i^{th}$ target resource based on an actual channel measurement result obtained by measuring the $i^{th}$ target resource, and may select different quantization tables for different coefficients based on magnitudes or distribution of amplitudes of coefficients. This can further reduce the feedback overheads as compared with using only one quantization table.

(5) A quantity of quantization bits for a phase of a coefficient.

In this possible implementation, the terminal may determine the phase of the coefficient of the $i^{th}$ target resource based on an actual channel measurement result obtained by measuring the $i^{th}$ target resource, and may select different quantities of quantization bits for different coefficients based on magnitudes or distribution of phases of coefficients. This can further reduce the feedback overheads as compared with using only one quantity of quantization bits.

(6) A quantization table for a phase of a coefficient.

In this possible implementation, the terminal may determine the phase of the coefficient of the $i^{th}$ target resource based on an actual channel measurement result obtained by measuring the $i^{th}$ target resource, and may select different quantization tables for different coefficients based on magnitudes or distribution of phases of coefficients. This can further reduce the feedback overheads as compared with using only one quantization table.

In a possible implementation, the quantity $M_{v,i}$ of the basis vectors is not greater than a maximum quantity $M_{max,i}$ of basis vectors configured or associated by the network-side device, where $M_{max,i}$ is a maximum quantity of basis vectors configured for or associated with the $i^{th}$ target resource.

In this embodiment of this application, the network-side device may uniformly configure or associate one maximum quantity of basis vectors for a plurality of target resources. For example, the network-side device may configure or associate only one $M_{max}$, which represents a maximum quantity of basis vectors for all measurement resources. In this possible implementation, the network-side device uniformly configures or associates one maximum quantity of basis vectors for the plurality of target resources. This can reduce overheads of configuring or associating the maximum quantity of basis vectors for the target resources by the network-side device.

Alternatively, in a possible implementation, the network-side device may configure or associate an independent maximum quantity of basis vectors for each target resource. For example, the network-side device may configure or associate an independent maximum quantity $M_{max,i}$ of basis vectors for each TRP or each measurement resource; or the network-side device may configure or associate an independent maximum quantity $M_{max,i}$ of basis vectors for each TRP group or each measurement resource group, where all TRPs or measurement resources in the TRP group or measurement resource group use corresponding $M_{max,i}$. In this possible implementation, the network-side device may configure or associate different maximum quantities of basis vectors for different measurement resources or measurement resource groups, so that the configured or associated maximum quantities of basis vectors can adapt to specific measurement resources or measurement resource groups.

S214. The terminal sends the first PMI parameter of the $i^{th}$ target resource.

In this embodiment of this application, the terminal performs channel measurement based on the M target resources configured by the network-side device; then obtains a first PMI parameter of each target resource among the N target resources based on channel measurement results of the M target resources, where the first PMI parameter includes but is not limited to at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and then feeds back the obtained first PMI parameter of the target resource. Therefore, the terminal can feed back the PMI parameter based on channel measurement information of each target resource in a scenario in which the network-side device may configure a plurality of target resources. In addition, in this embodiment of this application, the terminal determines a corresponding quantity of delays or beams for feedback, to avoid a problem that the feedback overheads are further increased when a quantity statically configured by the network is excessively large, and a problem that accuracy of a PMI fed back by the UE is low when a statically configured quantity is excessively small, so that the terminal can feed back the PMI more dynamically and flexibly, thereby further improving feedback performance and accuracy of the PMI.

In a possible implementation, S214 may include: the terminal sends CSI, where CSI part 1 includes first indication information, and the first indication information is used to indicate the quantity $M_{v,i}$ of the basis vectors of the $i^{th}$ target resource. For example, the terminal maps the first indication information about the quantity $M_{v,i}$ of the basis vectors of the $i^{th}$ target resource to channel state information CSI part 1 for sending. For example, the terminal feeds back the quantity $M_{v,i}$ of the basis vectors of the $i^{th}$ target resource (for example, an $i^{th}$ measurement resource or an $i^{th}$ measurement resource group, or an $i^{th}$ TRP or an $i^{th}$ TRP group associated with an $i^{th}$ measurement resource or an $i^{th}$ measurement resource group) to the network-side device by using a bit sequence in CSI part 1. In this possible implementation, the terminal feeds back the quantity $M_{v,i}$ of the basis vectors of the $i^{th}$ target resource in CSI part 1, so that the network-side device can obtain the quantity of the basis vectors included in the PMI parameter fed back by the terminal by using CSI part 1, and further determine a length of CSI part 2, and obtain corresponding basis vector information by parsing CSI part 2.

In a possible implementation, a length of a bit sequence corresponding to the first indication information about the quantity $M_{v,i}$ of the basis vectors is $\lceil log_2 M_{max,i} \rceil$, where $M_{max,i}$ is a maximum quantity of basis vectors configured for or associated with the $i^{th}$ target resource. In this implementation, the bit length of the first indication information for indicating the quantity $M_{v,i}$ of the basis vectors, determined based on $M_{max,i}$, can ensure that the length can indicate all possible quantities $M_{v,i}$ of basis vectors, without adding unnecessary overheads.

In the foregoing possible implementation, a location order of first indication information about quantities $M_{v,i}$ of basis vectors of the N target resources in CSI part 1 is the same as an order preconfigured by the network-side device, or a location order of first indication information about quantities $M_{v,i}$ of basis vectors of the N target resources in CSI part 1 is the same as a configuration order of the plurality of target resources. In other words, when the terminal maps the first indication information about the quantity $M_{v,i}$ of the basis vectors of each target resource, a mapping order of the first indication information about the quantities $M_{v,i}$ of the basis vectors of the plurality of target resources in CSI part 1 is the same as the order preconfigured by the network-side device, or a mapping order of the first indication information about the quantities $M_{v,i}$ of the basis vectors of the plurality of target resources in CSI part 1 is the same as the configuration order of the plurality of target resources.

For example, to obtain a PMI for joint transmission of N TRPs (that is, N TRPs associated with the N target resources), if a strongest coefficient of each TRP (or each target resource) is cyclically shifted to delay (delay) 0, it is only necessary to additionally notify the network-side device of a quantity of delays selected except delay 0 in this case, that is, N bit sequences are added in CSI part 1, where a length of a bit sequence corresponding to the $i^{th}$ TRP is $\lceil log_2 M_{max,i} \rceil$.

For another example, to obtain a PMI for joint transmission of N TRPs, if a location of a delay corresponding to a strongest coefficient of each TRP can be obtained by using CSI part 2, it is only necessary to additionally notify the network-side device of a quantity of delays selected except the delay corresponding to the strongest coefficient, that is, N bit sequences are added in CSI part 1, where a length of a bit sequence corresponding to the i$^{th}$ TRP is $\left\lceil log_2 M_{max,i} \right\rceil$.

For another example, to obtain a PMI for joint transmission of N TRPs, if a strongest coefficient of each TRP is cyclically shifted to delay 0, and it is only necessary to additionally notify the network of a quantity of delays selected except delay 0, and the network configures $M_{max,i} = 4$ for the i$^{th}$ target resource (associated with the i$^{th}$ TRP), a bit sequence with a length of $\left\lceil log_2 M_{max,i} \right\rceil = 2$ is added in CSI part 1, where 00 represents 0 delay, 01 represents 1 delay, 10 represents 2 delays, 11 represents 3 delays, and adding delay 0 may indicate 1/2/3/5 delays.

In a possible implementation, CSI part 1 further includes second indication information, and the second indication information is used to indicate the N target resources. In other words, CSI part 1 may include the first indication information about the quantities $M_{v,i}$ of the basis vectors of the N target resources selected by the terminal (that is, target resources recommended by the terminal), and CSI part 1 may further include the second indication information indicating the N target resources. The first indication information and the second indication information are located in different fields in CSI part 1.

In the foregoing possible implementation, S214 may include the following steps.

Step 1: The terminal maps the first indication information about the quantities of the basis vectors of the target resources recommended by the terminal, to CSI part 1.

Step 2: The terminal maps the second indication information about the target resources recommended by the terminal, to a first field in CSI part 1, where the first field is a field other than a field to which the first indication information is mapped.

Step 3: The terminal sends CSI part 1.

In the foregoing possible implementation, the terminal may map the first indication information about the quantities of the basis vectors of the target resources recommended by the terminal, to CSI part 1, and map the second indication information about the target resources recommended by the terminal, to another field in CSI part 1. For example, the terminal may select the recommended target resources based on the channel measurement result, so that the network-side device can know, based on the PMI parameters fed back by the terminal, the target resources recommended by the terminal, to select TRPs associated with the target resources recommended by the terminal for joint transmission. This can further improve efficiency of joint transmission.

For example, by using another field or a new field in CSI part 1, the terminal indicates information about a measurement resource or a measurement resource group recommended by the terminal. In this case, a sequence indicating the quantity $M_{v,i}$ of the basis vectors in CSI part 1 may include only an indication about a quantity of basis vectors of the measurement resource or the measurement resource group recommended by the terminal, without feeding back an indication about quantities of basis vectors of other measurement resources or measurement resource groups.

In this possible implementation, a quantity N of pieces of the first indication information mapped to CSI part 1 is not greater than the quantity M of the plurality of target resources configured by the network-side device. In other words, the quantity of pieces of the first indication information about the quantity of the basis vectors fed back by the terminal in CSI part 1 may be less than the quantity of the target resources (for example, measurement resources or measurement resource groups) configured by the network-side device.

In the foregoing possible implementation, to ensure that a length of CSI part 1 is unchanged, before the terminal sends CSI part 1, the method further includes: the terminal performs a zero-padding operation on CSI part 1 by using a zero sequence, where a length of CSI part 1 after the zero-padding operation is a predetermined value.

For example, the network configures four measurement resources: channel measurement resource (Channel Measurement Resource, CMR) 0, CMR 1, CMR 2, and CMR 3 (associated with four TRPs) to obtain a PMI for joint transmission. In addition, the network-side device configures the terminal to select an appropriate CMR to feed back a corresponding PMI, and the network-side device indicates that a maximum quantity of delays associated with each CMR is 4. The terminal selects, based on the measurement resources, CMR 0, CMR 1, and CMR 2 (corresponding to three TRPs) to obtain corresponding PMI parameters, where a quantity of delays associated with CMR 0 is 2, a quantity of delays associated with CMR 1 is 3, and a quantity of delays associated with CMR 2 is 4. In this case, a TRP indication field included in CSI part 1 fed back by the terminal is 1110, used to indicate the selected CMRs to the network (in this case, an order of indication fields is the same as a configuration order of the CMRs). In addition, based on an order of the selected CMRs, CSI part 1 further includes quantities of delays selected by the terminal based on the three CMRs, and a length of each bit sequence used to indicate a quantity is $\left\lceil log_2 4 \right\rceil = 2 bit$. Because the delay corresponding to the strongest coefficient does not need to be counted, a bit sequence associated with CMR 0 is 01, representing 2 delays (delay); a bit sequence associated with CMR 1 is 10, representing 3 delays; and a bit sequence associated with CMR 2 is 11, representing 4 delays.

In another possible implementation, a length of a bit sequence corresponding to the indication information about the quantity $M_{v,i}$ of the basis vectors may alternatively be $\lceil log_2(M_{max,i} + 1) \rceil$, where $M_{max,i}$ is a maximum quantity of basis vectors configured for or associated with the i$^{th}$ target resource.

In the foregoing possible implementation, a location order of first indication information about quantities $M_{v,i}$ of basis vectors of the N target resources in CSI part 1 is the same as an order preconfigured by the network-side device, or a location order of first indication information about quantities $M_{v,i}$ of basis vectors of the N target resources in CSI part 1 is the same as a configuration order of the plurality of target resources. In other words, a mapping order of the first indication information about the quantities $M_{v,i}$ of the basis vectors of the plurality of target resources in CSI part 1 is the same as the order preconfigured by the network-side device, or a mapping order of the first indication information about the quantities $M_{v,i}$ of the basis vectors of the plurality of target resources in CSI part 1 is the same as the configuration order of the plurality of target resources.

For example, to obtain a PMI for joint transmission of the N target resources (measurement resources or measurement resource groups), N bit sequences are added in CSI part 1 in this case, where a length of a bit sequence corresponding to the i$^{th}$ TRP is $\lceil log_2(M_{max,i} + 1) \rceil$.

In the foregoing possible implementation, before the terminal sends the CSI in S214, in a case that the terminal does not recommend the i$^{th}$ target resource, the terminal maps or sets the bit sequence corresponding to the first indication information about the quantity $M_{v,i}$ of the basis vectors of the i$^{th}$ target resource to an all-zero sequence. In other words, when the terminal maps the first indication information about the quantity $M_{v,i}$ of the basis vectors of the i$^{th}$ target resource to CSI part 1, in the case that the terminal does not recommend the i$^{th}$ target resource, the terminal maps the bit sequence corresponding to the first indication information about the quantity $M_{v,i}$ of the basis vectors of the i$^{th}$ target resource to an all-zero sequence. In this possible implementation, for the target resource that is not recommended, the terminal maps the bit sequence corresponding to the first indication information about the quantity $M_{v,i}$ of the basis vectors of the target resource in CSI part 1 to an all-zero sequence, to indicate to the network-side device that the terminal does not recommend the target resource, so that the network-side device can be prevented from selecting a TRP corresponding to the target resource for joint transmission.

In the foregoing possible implementation, a quantity N of pieces of the first indication information about the quantity of the basis vectors fed back by the terminal in CSI part 1 may be equal to a quantity of measurement resources or a quantity M of measurement resource groups configured by the network-side device.

For example, the network-side device configures four measurement resources: CMR 0, CMR 1, CMR 2, and CMR 3 (associated with four TRPs) to obtain a PMI for joint transmission. In addition, the network configures the terminal to select an appropriate CMR to feed back a corresponding PMI, and the network indicates that a maximum quantity of delays associated with each CMR is 4. Based on the measurement resources, the terminal selects CMR 0, CMR 1, and CMR 2 (corresponding to three TRPs) to obtain corresponding PMI parameters, where a quantity of delays associated with CMR 0 is 2, a quantity of delays associated with CMR 1 is 3, and a quantity of delays associated with CMR 2 is 4. In this case, quantities of delays selected for the four CMRs are fed back in a configuration order of the CMRs in CSI part 1 fed back by the terminal. A length of each bit sequence used to indicate a quantity is $log_2[4+1] = 3 bit$. A bit sequence associated with CMR 0 is 010, representing 2 delays; a bit sequence associated with CMR 1 is 011, representing 3 delays; a bit sequence associated with CMR 2 is 100, representing 4 delays; and a bit sequence associated with CMR 3 is 000, representing 0 delay. Because the quantity of delays for CMR 3 is 0, it indicates that the terminal does not obtain a PMI based on this CMR. In this case, information in CSI part 2 corresponds to CMR 0, CMR 1, and CMR 2 only.

For another example, to obtain a PMI for joint transmission of N TRPs, if the network configures $M_{max,i}$ = 4 for the i$^{th}$ target resource (associated with the i$^{th}$ TRP), a bit sequence with a length of $\lceil log_2 5 \rceil = 3$ is added in CSI part 1, where 000 represents 0 delay, 001 represents 1 delay, 010 represents 2 delays, 011 represents 3 delays, and 100 represents 4 delays. If 000 is fed back, it indicates that the terminal does not recommend this TRP for joint transmission.

In another possible implementation, a length of a bit sequence corresponding to the first indication information about the quantity $M_{v,i}$ of the basis vectors is $\lceil log_2 M_{max,i} \rceil$ or $\lceil log_2(M_{max,i} + 1) \rceil$, where $M_{max,i}$ is a maximum quantity of basis vectors configured for or associated with the i$^{th}$ target resource.

Optionally, in a case that the i$^{th}$ target resource is a target resource with strongest energy among the N target resources, the length of the bit sequence corresponding to the first indication information about the quantity $M_{v,i}$ of the basis vectors is $\lceil log_2 M_{max,i} \rceil$, or in a case that the i$^{th}$ target resource is a target resource without strongest energy among the N target resources, the length of the bit sequence corresponding to the first indication information about the quantity

$M_{v,i}$ of the basis vectors is $\left\lceil log_2(M_{max,i} + 1) \right\rceil$.

In the foregoing possible implementation, optionally, in CSI part 1, first indication information corresponding to the target resource with the strongest energy is located before first indication information corresponding to the target resource without the strongest energy, and a location order of the first indication information corresponding to the target resource without the strongest energy in CSI part 1 is the same as an order preconfigured by the network-side device, or a location order of the first indication information corresponding to the target resource without the strongest energy in CSI part 1 is the same as a configuration order of the target resource without the strongest energy. For example, a mapping priority of the first indication information corresponding to the target resource with the strongest energy is higher than a mapping priority of the first indication information corresponding to the target resource without the strongest energy, and a mapping order of the first indication information corresponding to the target resource without the strongest energy in CSI part 1 is the same as an order preconfigured by the network-side device, or a mapping order of the first indication information corresponding to the target resource without the strongest energy in CSI part 1 is the same as a configuration order of the target resource without the strongest energy. In other words, the terminal preferentially maps the first indication information corresponding to the target resource with the strongest energy to CSI part 1, and then maps the first indication information corresponding to the target resource without the strongest energy. In a case that there are a plurality of target resources without the strongest energy, first indication information about the plurality of target resources without the strongest energy is mapped in an order preconfigured by the network-side device or a configuration order of the target resources without the strongest energy.

For example, a mapping priority of a bit sequence of first indication information about a quantity of basis vectors of a strongest measurement resource is higher than mapping priorities of other measurement resources, and a mapping order of the other measurement resources is the same as an order preconfigured by the network or a configuration order of the measurement resources. Alternatively, a mapping priority of a bit sequence of first indication information about a quantity of basis vectors of a measurement resource group in which a strongest measurement resource is located is higher than mapping priorities of other measurement resource groups, and a mapping order of the other measurement resource groups is the same as an order preconfigured by the network or a configuration order of the measurement resource groups.

For example, to obtain a PMI for joint transmission of N TRPs, if only a strongest coefficient corresponding to a strongest measurement resource is cyclically shifted to delay (delay) 0, and the terminal feeds back an indication about the strongest measurement resource, a bit sequence corresponding to the strongest measurement resource is added in CSI part 1, where a length of the bit sequence corresponding to the strongest measurement resource is $\left\lceil log_2 M_{max,i} \right\rceil$. In addition, N-1 bit sequences corresponding to measurement resources other than the strongest measurement resource are added, where a length of a bit sequence corresponding to the i$^{th}$ measurement resource is $\left\lceil log_2(M_{max,i} + 1) \right\rceil$.

In the foregoing possible implementation, optionally, before the terminal sends the CSI in S214, the method includes: the terminal sets the bit sequence corresponding to the first indication information about the quantity $M_{v,i}$ of the basis vectors of the i$^{th}$ target resource to an all-zero sequence, where in a case that the i$^{th}$ target resource is a target resource without strongest energy, the all-zero sequence indicates that the terminal does not recommend the i$^{th}$ target resource. In other words, the terminal maps the bit sequence corresponding to the first indication information about the quantity $M_{v,i}$ of the basis vectors of the i$^{th}$ target resource to an all-zero sequence, where in the case that the i$^{th}$ target resource is the target resource without strongest energy, the all-zero sequence indicates that the terminal does not recommend the i$^{th}$ target resource. For example, when the bit sequence corresponding to the i$^{th}$ measurement resource fed back by the terminal is an all-zero sequence, the i$^{th}$ measurement resource is a measurement resource other than a measurement resource corresponding to a strongest coefficient, and it means that the terminal does not recommend a TRP associated with this measurement resource for multi-TRP transmission. In this possible implementation, the quantity of pieces of the first indication information about the quantity of the basis vectors fed back by the terminal in CSI part 1 may be equal to the quantity of measurement resources or the quantity of measurement resource groups configured by the network-side device.

For example, the network-side device configures four measurement resources: CMR 0, CMR 1, CMR 2, and CMR 3 (associated with four TRPs) to obtain a PMI for joint transmission. In addition, the network-side device configures the terminal to select an appropriate CMR to feed back a corresponding PMI, and the network indicates that a maximum quantity of delays associated with each CMR is 4. Based on the measurement resources, the terminal selects CMR 0, CMR 1, and CMR 2 (corresponding to three TRPs) to obtain corresponding PMI parameters, where a quantity of delays associated with CMR 0 is 2, CMR 1 is of a strongest TRP and a quantity of delays associated with CMR 1 is 3, and a quantity of delays associated with CMR 2 is 4. In this case, the quantity of the delays of the strongest TRP fed back by the terminal in CSI part 1 is preferentially fed back, and a length of a bit sequence used to indicate this quantity is $log_2[4] = 2bit$; and for other TRPs, quantities of delays selected are fed back in a configuration order of the CMRs, and a length of each bit sequence used to indicate a quantity is $\log_2\lceil 4 + 1 \rceil = 3\text{bit}$. In this case, a feedback order is: a bit sequence associated with CMR 1 is 10, representing 3 delays; a bit sequence associated with CMR 0 is 010, representing 2 delays; a bit sequence associated with CMR 2 is 100, representing 4 delays; and a bit sequence associated with CMR 3 is 000, representing 0 delay. Because the quantity of delays for CMR 3 is 0, it indicates that the terminal does not obtain a PMI based on this CMR. In this case, information in CSI part 2 corresponds to CMR 0, CMR 1, and CMR 2 only.

In each of the foregoing possible implementations, in a case that the terminal does not recommend the $i^{th}$ target resource, CSI part 2 does not include at least one of the following information corresponding to the $i^{th}$ target resource:

(1) amplitude information and phase information of a non-zero coefficient;
(2) spatial domain information, where the spatial domain information is indication information of a spatial beam corresponding to the $i^{th}$ target resource;
(3) frequency domain information, where the frequency domain information is delay indication information corresponding to the $i^{th}$ target resource in delay domain;
(4) time domain information, where the time domain information is Doppler indication information corresponding to the $i^{th}$ target resource in time domain or Doppler domain; and
(5) non-zero coefficient indication information.

In the foregoing possible implementation, overheads of PMI coefficient feedback in CSI part 2 can be reduced.

In a possible implementation, S214 may further include:

Step 1: The terminal determines locations of the $M_{v,i}$ basis vectors of the $i^{th}$ target resource based on the variation range of the basis vectors of the $i^{th}$ target resource, where the plurality of target resources correspond to a same variation range of basis vectors, or different target resources among the plurality of target resources correspond to different variation ranges of basis vectors.

Step 2: The terminal sends third indication information for indicating the locations of the $M_{v,i}$ basis vectors of the $i^{th}$ target resource.

In the foregoing possible implementation, the terminal may feed back the third indication information for indicating the locations of the $M_{v,i}$ basis vectors of the $i^{th}$ target resource to the network-side device, so that the network-side device can determine the locations of the basis vectors of the $i^{th}$ target resource fed back by the terminal and further obtain the PMI fed back by the terminal.

In a possible implementation, in S214, the terminal sends CSI part 2, where CSI part 2 includes the third indication information. In other words, the terminal may map the third indication information about the locations of the $M_{v,i}$ basis vectors of the $i^{th}$ target resource to CSI part 2 for sending.

Optionally, a length of a bit sequence corresponding to the third indication information about the locations of the $M_{v,i}$ basis vectors of the $i^{th}$ target resource is determined by the quantity $M_{v,i}$ of the basis vectors of the $i^{th}$ target resource and the variation range of the basis vectors of the $i^{th}$ target resource.

In a possible implementation, in a case that the variation range of the basis vectors is a continuous window, a length of a window corresponding to the $i^{th}$ target resource is determined by the maximum quantity $M_{max,i}$ of the basis vectors configured for or associated with the $i^{th}$ target resource; and/or in a case that the variation range of the basis vectors is a continuous window, a start position of a window corresponding to the $i^{th}$ target resource is determined by the maximum quantity $M_{max,i}$ of the basis vectors configured for or associated with the $i^{th}$ target resource.

For example, if the plurality of target resources correspond to a same variation range of basis vectors, that is, there is a variation range of basis vectors, the UE determines the $M_{v,i}$ basis vectors (i represents the $i^{th}$ measurement resource or the $i^{th}$ measurement resource group) based on the variation range of the basis vectors, and feeds back the locations of the corresponding basis vectors, where when the current variation range of the basis vectors is a continuous window, a window length is related only to $M_{max}$, for example, is $2M_{max}$. When the current variation range of the basis vectors is a continuous window, a start position $M_{initial}$ of the window is related only to $M_{max}$. For example, $M_{initial} \in \{-2M_{max} + 1, \cdots, 0\}$. In this case, a length of a sequence indicating the start position of the selected window fed back by the terminal in CSI part 2 is $\log_2\lceil 2 M_{max} \rceil$.

However, a length of a sequence indicating locations of $M_{v,i}$ or $M_{v,i}$ - 1 delays fed back by the terminal in CSI part 2 is related to $M_{v,i}$ and the variation range of the basis vectors, for example, is

$$v\left\lceil log_2\binom{N_3 - 1}{M_{v,i} - 1}\right\rceil, \quad v\left\lceil log_2\binom{N_3}{M_{v,i}}\right\rceil, \quad v\left\lceil log_2\binom{2M_{max} - 1}{M_{v,i} - 1}\right\rceil, \text{ or } \quad v\left\lceil log_2\binom{2M_{max}}{M_{v,i}}\right\rceil, \text{ where } \left(\begin{array}{c} A \\ B \end{array}\right) \text{ represents selection of a combinatorial number corresponding to quantity B from quantity A.}$$

However, if different target resources among the plurality of target resources correspond to different variation ranges of basis vectors, that is, if there are a plurality of variation ranges of basis vectors, and each variation range of basis vectors is associated with a measurement resource or a measurement resource group, when the current variation range of the basis vectors is a continuous window, the UE determines the $M_{v,i}$ basis vectors based on a start position and a length of the window, and feeds back the locations of the corresponding basis vectors, where when the current variation range of the basis vectors is a continuous window, the window length corresponding to the $i^{th}$ TRP or TRP group is related to $M_{max,i}$, for example, is $2M_{max,i}$. When the current variation range of the basis vectors is a continuous window, a start position of an $i^{th}$ window is related to $M_{max,i}$. For example, $M_{initial} \in \{-2M_{max} + 1, \cdots, 0\}$. In this case, a length of a sequence indicating the start position of the selected window fed back by the terminal in CSI part 2 is $\left\lceil log_2 \lceil 2 M_{max,i} \rceil \right\rceil$.

However, a length of a sequence indicating locations of $M_{v,i}$ or $M_{v,i}$ - 1 basis vectors fed back by the terminal in CSI part 2 is related to $M_{v,i}$ and the variation range of the basis vectors, for example, is

$$v\left\lceil log_2\left(\frac{N_3 - 1}{M_{v,i} - 1}\right)\right\rceil, \quad v\left\lceil log_2\left(\frac{N_3}{M_{v,i}}\right)\right\rceil, \quad v\left\lceil log_2\left(\frac{2M_{max} - 1}{M_{v,i} - 1}\right)\right\rceil, \text{ or } v\left\lceil log_2\left(\frac{2M_{max}}{M_{v,i}}\right)\right\rceil.$$

In a possible implementation, S214 may further include: the terminal sends a non-zero coefficient indication corresponding to the $i^{th}$ target resource, where a length of a bit sequence corresponding to the non-zero coefficient indication is $2vLM_{v,i}$, $v$ is a rank of a codebook, and L is one of the following or a product of any two thereof: a quantity of spatial beams, a quantity of delays in delay domain, and a quantity of Doppler in Doppler domain. For example, in S214, the UE feeds back a non-zero coefficient indication, and a length of a bit sequence of a non-zero coefficient indication for each selected target resource is $2vLM_{v,i}$. In this case, a quantity of non-zero coefficient indications is a quantity of measurement resources selected for feedback. Alternatively, a length of a bit sequence of a non-zero coefficient indication for each selected measurement resource group is $2vLM_{v,i}$. In this case, a quantity of non-zero coefficient indications is a quantity of selected measurement resource groups. In this possible implementation, when $M_{v,i}$ is a quantity of delays fed back for rank-v transmission of the $i^{th}$ TRP, compared with indicating a value of $M_v$ by the network, feedback by the UE is more flexible. When $M_{v,i}$ is less than $M_v$, the length of the bit sequence can be reduced. When $M_{v,i}$ is greater than $M_v$, PMI accuracy can be improved. Further, if L is the quantity of spatial beams, feeding back the value of L by the UE can further reduce feedback overheads or improve PMI accuracy.

In a possible implementation, that the terminal obtains a quantity of quantization bits for an amplitude of a coefficient of an $i^{th}$ target resource based on a channel measurement result of the $i^{th}$ target resource among the plurality of target resources in S212 may include: for transmission layer $l$, obtaining the quantity of the quantization bits for the amplitude of the coefficient of the $i^{th}$ target resource based on "a quantity of quantization bits for an amplitude of a coefficient corresponding to a first target resource is a high bit quantity and a quantity of quantization bits for an amplitude of a coefficient corresponding to another target resource is a low bit quantity"; and that the terminal obtains a quantization table for an amplitude of a coefficient of an $i^{th}$ target resource based on a channel measurement result of the $i^{th}$ target resource among the plurality of target resources may include: for transmission layer $l$, obtaining the quantization table for the amplitude of the coefficient of the $i^{th}$ target resource based on "a quantization bit table of the amplitude of the coefficient corresponding to the first target resource is a high-precision quantization table and a quantization table for the amplitude of the coefficient corresponding to the other target resource is a low-precision quantization table", where the first target resource is a target resource associated with a coefficient with a strongest amplitude among all coefficients associated with the plurality of target resources, the other target resource is a target resource other than the first target resource among the plurality of target resources, $l$ = 0, 1, ..., v, and v is an allowed transmission rank. In this possible implementation, quantization tables with different precision are used for different coefficients. Compared with a single quantization table indicated by the network, different quantization tables can be used for different amplitudes or phases of coefficients, and a low-precision quantization table can be used to reduce the feedback overheads, featuring higher flexibility. For example, if the network indicates a high-precision quantization table, a low-precision table may be introduced in terminal feedback to reduce the feedback overheads; or if the network indicates a low-precision quantization table, a high-precision table may be introduced in terminal feedback to improve PMI accuracy.

For example, for layer $l$, among all coefficients associated with a plurality of measurement resources, a quantity of quantization bits for an amplitude of a coefficient corresponding to a measurement resource or a measurement resource group associated with a coefficient with a strongest amplitude is a high bit quantity, or a quantization table for an amplitude of a coefficient thereof is a high-precision quantization table; and a quantity of quantization bits for an amplitude of a coefficient corresponding to another measurement resource or measurement resource group is a low bit quantity, or a quantization table for an amplitude of a coefficient thereof is a low-precision quantization table, where layer $l$ is any layer of rank-v transmission.

For example, to obtain a PMI for joint transmission in rank-3 transmission, the UE measures a plurality of measurement resources or measurement resource groups, and obtains a projection coefficient of each measurement resource or measurement resource group on a basis vector, where for a measurement resource or a measurement resource group associated with a projection coefficient with a largest amplitude, a 4-bit amplitude quantization table is used for quantization, and for projection coefficients associated with other measurement resources or measurement resource groups, a 3-bit amplitude quantization table is used for quantization.

In another possible implementation, that the terminal obtains a quantity of quantization bits for an amplitude of a coefficient of an $i^{th}$ target resource based on a channel measurement result of the $i^{th}$ target resource among the plurality of target resources in S212 includes: obtaining the quantity of the quantization bits for the amplitude of the coefficient of the $i^{th}$ target resource based on "a quantity of quantization bits for an amplitude of a coefficient associated with a target layer among transmission layers is a high bit quantity and a quantity of quantization bits for an amplitude of a coefficient associated with a layer other than the target layer among the transmission layers is a low bit quantity", where the target layer includes one of the following: a layer with strongest energy, a layer with a largest sum of amplitudes of coefficients, a layer indicated by a layer indicator, and a predetermined layer among all layers; and that the terminal obtains a quantization table for an amplitude of a coefficient of an $i^{th}$ target resource based on a channel measurement result of the $i^{th}$ target resource among the plurality of target resources includes: obtaining the quantization table for the amplitude of the coefficient of the $i^{th}$ target resource based on "a quantization bit table of the amplitude of the coefficient associated with the target layer is a high-precision quantization table and a quantization table for the amplitude of the coefficient associated with the other layer is a low-precision quantization table". In this possible implementation, quantization tables with different precision are used for different amplitudes of coefficients. Compared with a single quantization table indicated by the network, different quantization tables can be used for different amplitudes of coefficients, and a low-precision quantization table can be used to reduce the feedback overheads, featuring higher flexibility. For example, if the network indicates a high-precision quantization table, a low-precision quantization table may be introduced in terminal feedback to reduce the feedback overheads; or if the network indicates a low-precision quantization table, a high-precision table may be introduced in terminal feedback to improve PMI accuracy.

For example, for a strongest layer, a quantity of quantization bits for an amplitude of an associated coefficient is a high bit quantity, or a quantization table for an amplitude of a coefficient is a high-precision quantization table; and for a non-strongest layer, a quantity of quantization bits for an amplitude of an associated coefficient is a low bit quantity, or a quantization table for an amplitude of a coefficient is a low-precision quantization table.

For example, to obtain a PMI for joint transmission in rank-3 (layer 0, layer 1, or layer 2) transmission, the UE measures a plurality of measurement resources or measurement resource groups, and obtains a projection coefficient of each measurement resource or measurement resource group on a basis vector, where a projection coefficient corresponding to a strongest layer (layer 0) is quantized by using a 4-bit amplitude quantization table, and projection coefficients associated with other layers are quantized by using a 3-bit amplitude quantization table.

In a possible implementation, that the terminal obtains a quantity of quantization bits for a phase of a coefficient of an $i^{th}$ target resource based on a channel measurement result of the $i^{th}$ target resource among the plurality of target resources in S212 includes: for transmission layer $l$, obtaining the quantity of the quantization bits for the phase of the coefficient of the $i^{th}$ target resource based on "a quantity of quantization bits for a phase of a coefficient corresponding to a second target resource is a high bit quantity and a quantity of quantization bits for a phase of a coefficient corresponding to another target resource is a low bit quantity"; and that the terminal obtains a quantization table for a phase of a coefficient of an $i^{th}$ target resource based on a channel measurement result of the $i^{th}$ target resource among the plurality of target resources includes: for transmission layer $l$, obtaining the quantization table for the phase of the coefficient of the $i^{th}$ target resource based on "a quantization bit table of the phase of the coefficient corresponding to the second target resource is a high-precision quantization table and a quantization table for the phase of the coefficient corresponding to the other target resource is a low-precision quantization table", where the second target resource is a target resource associated with a coefficient with a strongest amplitude among all coefficients associated with the plurality of target resources, the other target resource is a target resource other than the second target resource among the plurality of target resources, $l = 0$, 1, ..., v, and v is an allowed transmission rank. In this possible implementation, quantization bit tables with different precision are used for different phases of coefficients. Compared with a single quantization table indicated by the network, different quantization bit tables can be used for different phases of coefficients, and a low-precision quantization table can be used to reduce the feedback overheads, featuring higher flexibility. For example, if the network indicates a high-precision quantization table, a low-precision quantization table may be introduced in terminal feedback to reduce the feedback overheads; or if the network indicates a low-precision quantization table, a high-precision table may be introduced in terminal feedback to improve PMI accuracy.

For example, for layer $l$, among all coefficients associated with a plurality of measurement resources, a quantity of quantization bits for a phase of a coefficient corresponding to a measurement resource or a measurement resource group associated with a coefficient with a strongest amplitude is a high bit quantity; and a quantity of quantization bits for a phase of a coefficient corresponding to another measurement resource or measurement resource group is a low bit quantity, where layer $l$ is any layer of rank-v transmission.

In a possible implementation, that the terminal obtains a quantity of quantization bits for a phase of a coefficient of an $i^{th}$ target resource based on a channel measurement result of the $i^{th}$ target resource among the plurality of target resources in S212 may include: obtaining the quantity of the quantization bits for the phase of the coefficient of the $i^{th}$ target resource based on "a quantity of quantization bits for a phase of a coefficient associated with a target layer among transmission layers is a high bit quantity and a quantity of quantization bits for a phase of a coefficient associated with a layer other than the target layer among the transmission layers is a low bit quantity", where the target layer includes one of the following: a layer corresponding to a coefficient with strongest energy or a strongest amplitude, a layer with a largest sum of amplitudes of coefficients, a layer indicated by a layer indicator, and a predetermined layer among all layers; and that the terminal obtains a quantization table for a phase of a coefficient of an $i^{th}$ target resource based on a channel measurement result of the $i^{th}$ target resource among the plurality of target resources includes: obtaining the quantization table for the phase of the coefficient of the $i^{th}$ target resource based on "a quantization bit table of the phase of the coefficient associated with the target layer is a high-precision quantization table and a quantization table for the phase of the coefficient associated with the other layer is a low-precision quantization table". In this possible implementation, quantization bit tables with different precision are used for different phases of coefficients. Compared with a single quantization table indicated by the network, different quantization bit tables can be used for different phases of coefficients, and a low-precision quantization table can be used to reduce the feedback overheads, featuring higher flexibility. For example, if the network indicates a high-precision quantization table, a low-precision quantization table may be introduced in terminal feedback to reduce the feedback overheads; or if the network indicates a low-precision quantization table, a high-precision table may be introduced in terminal feedback to improve PMI accuracy.

For example, for a strongest layer, a quantity of quantization bits for a phase of an associated coefficient is a high bit quantity; and for a non-strongest layer, a quantity of quantization bits for a phase of an associated coefficient is a low bit quantity, or a quantization table for an amplitude of a coefficient is a low-precision quantization table.

According to the technical solution provided in this embodiment of this application, the terminal may obtain, based on the plurality of measurement resources configured by the network-side device, a quantity $M_{v,i}$ of basis vectors of the $i^{th}$ measurement resource or measurement resource group selected for feedback from the plurality of measurement resources or measurement resource groups, and feed back the quantity $M_{v,i}$, where for each measurement resource or measurement resource group, a same sequence length may be defined for feeding back a quantity of basis vectors, or different sequence lengths may be defined for feeding back a quantity of basis vectors for a strongest measurement resource or measurement resource group; or the terminal may recommend a TRP combination to the network by using a quantity $M_{v,i}$ of basis vectors, thereby reducing PMI parameter feedback overheads in a scenario of joint transmission and improving accuracy of PMI feedback.

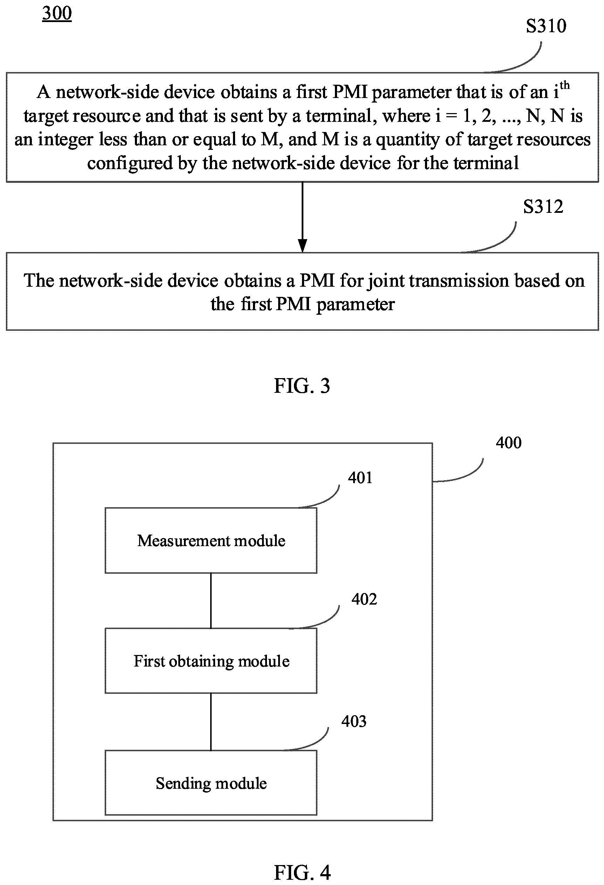

FIG. 3 is a schematic flowchart of a PMI obtaining method for joint transmission according to an embodiment of this application. The method 300 may be performed by a network-side device. In other words, the method may be performed by software or hardware installed on the network-side device. As shown in FIG. 3, the method may include the following steps.

S310. A network-side device obtains a first PMI parameter that is of an $i^{th}$ target resource and that is sent by a terminal, where i = 1, 2, ..., N, N is an integer less than or equal to M, M is a quantity of target resources configured by the network-side device for the terminal, and the first PMI parameter includes at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient.

In this embodiment of this application, the terminal may send the first PMI parameter of the $i^{th}$ target resource in the manner described in the foregoing method 200. For details, refer to the description in the foregoing method 200. Details are not described herein again.

Optionally, the quantity $M_{v,i}$ of the basis vectors is not greater than a maximum quantity $M_{max,i}$ of basis vectors configured or associated by the network-side device, where $M_{max,i}$ is a maximum quantity of basis vectors configured for or associated with the $i^{th}$ target resource.

In a possible implementation, the method further includes: the network-side device uniformly configures or associates one maximum quantity of basis vectors for the plurality of target resources; or the network-side device configures or associates an independent maximum quantity of basis vectors for each target resource.

S312. The network-side device obtains a PMI for joint transmission based on the first PMI parameter.

The network-side device may obtain, based on a first PMI parameter of each target resource fed back by the terminal, a PMI fed back by the terminal.

For example, the network-side device obtains CSI part 1 sent by the terminal, where CSI part 1 includes first indication information about the quantity $M_{v,i}$ of the basis vectors of the $i^{th}$ target resource; then determines, based on the first indication information, the quantity $M_{v,i}$ of the basis vectors of the $i^{th}$ target resource included in CSI part 2; then obtains, based on the quantity $M_{v,i}$ of the basis vectors of the $i^{th}$ target resource included in CSI part 2, a second PMI parameter of the $i^{th}$ target resource in CSI part 2; and finally obtains, based on the first PMI parameter and the second PMI parameter, a PMI corresponding to the $i^{th}$ target resource.

For example, the network side determines a quantity of corresponding basis vectors and/or a quantity of non-zero coefficients based on CSI part 1, thereby determining a size of CSI part 2, where part 2 carries indication information about basis vectors and amplitude and phase quantization information of coefficients required for restoring the PMI. A type 2 codebook in Rel-16 is used as an example. The network restores a matrix $W_1$ based on indication information about spatial domain basis vectors carried in CSI part 2, then restores a matrix $W_f^H$ based on indication information about frequency domain basis vectors carried in CSI part 2, then obtains a coefficient matrix $\tilde{W}_2$ based on the amplitude and phase quantization information of the coefficients carried in CSI part 2 and location information of the coefficients, and then obtains a precoding matrix W by using the following formula:

$$W = W_1 \widetilde{W}_2 W_f^H.$$

The PMI parameter feedback method for joint transmission according to the embodiments of this application may be performed by a PMI parameter feedback apparatus for joint transmission. A PMI parameter feedback apparatus for joint transmission according to the embodiments of this application is described by assuming that the PMI parameter feedback method for joint transmission is performed by the PMI parameter feedback apparatus in the embodiments of this application in the embodiments of this application.

FIG. 4 is a schematic diagram of a structure of a PMI parameter feedback apparatus for joint transmission according to an embodiment of this application. As shown in FIG. 4, the apparatus mainly includes a measurement module 401, a first obtaining module 402, and a sending module 403.

In this embodiment of this application, the measurement module 401 is configured to perform channel measurement based on M target resources configured by a network-side device, where the target resources include measurement resources or a measurement resource group, and M is an integer greater than 1; the first obtaining module 402 is configured to obtain a first PMI parameter of an i-th target resource based on a channel measurement result of the i-th target resource among the plurality of target resources, where i = 1, 2, ..., N, N is an integer less than or equal to M, and the first PMI parameter includes at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and the sending module 403 is configured to send the first PMI parameter of the i-th target resource.

In a possible implementation, the quantity $M_{v,i}$ of the basis vectors is not greater than a maximum quantity $M_{max,i}$ of basis vectors configured or associated by the network-side device, where $M_{max,i}$ is a maximum quantity of basis vectors configured for or associated with the i-th target resource.

In a possible implementation, the network-side device uniformly configures or associates one maximum quantity of basis vectors for the plurality of target resources; or the network-side device configures or associates an independent maximum quantity of basis vectors for each target resource.

In a possible implementation, the sending, by the sending module 403, the first PMI parameter of the i-th target resource includes: sending channel state information CSI, where CSI part 1 includes first indication information, and the first indication information is used to indicate the quantity $M_{v,i}$ of the basis vectors of the i-th target resource.

In a possible implementation, a length of a bit sequence corresponding to the first indication information about the quantity $M_{v,i}$ of the basis vectors is $\left\lceil log_2 M_{max,i} \right\rceil$, where $M_{max,i}$ is a maximum quantity of basis vectors configured for or associated with the i-th target resource.

In a possible implementation, CSI part 1 further includes second indication information, and the second indication information is used to indicate the N target resources.

In a possible implementation, the sending module 403 is further configured to perform, by the terminal, a zero-padding operation on CSI part 1 by using a zero sequence, where a length of CSI part 1 after the zero-padding operation is a predetermined value.

In a possible implementation, a length of a bit sequence corresponding to the indication information about the quantity $M_{v,i}$ of the basis vectors is $\left\lceil log_2(M_{max,i} + 1) \right\rceil$, where $M_{max,i}$ is a maximum quantity of basis vectors configured for or associated with the i-th target resource.

In a possible implementation, the sending module 403 is further configured to set a bit sequence corresponding to the first indication information about the quantity $M_{v,i}$ of the basis vectors of the i-th target resource to an all-zero sequence in a case that the i-th target resource is not recommended.

In a possible implementation, a location order of first indication information about quantities $M_{v,i}$ of basis vectors of the N target resources in CSI part 1 is the same as an order preconfigured by the network-side device, or a location order of first indication information about quantities $M_{v,i}$ of basis vectors of the N target resources in CSI part 1 is the same as a configuration order of the plurality of target resources.

In a possible implementation, a length of a bit sequence corresponding to the first indication information about the quantity $M_{v,i}$ of the basis vectors is $\lceil log_2 M_{max,i} \rceil$ or $\lceil log_2(M_{max,i}+1) \rceil$, where $M_{max,i}$ is a maximum quantity of basis vectors configured for or associated with the $i^{th}$ target resource.

In a possible implementation, in a case that the $i^{th}$ target resource is a target resource with strongest energy among the N target resources, the length of the bit sequence corresponding to the first indication information about the quantity $M_{v,i}$ of the basis vectors is $\lceil log_2 M_{max,i} \rceil$, or in a case that the $i^{th}$ target resource is a target resource without strongest energy among the N target resources, the length of the bit sequence corresponding to the first indication information about the quantity $M_{v,i}$ of the basis vectors is $\lceil log_2(M_{max,i}+1) \rceil$.

In a possible implementation, in CSI part 1, first indication information corresponding to the target resource with the strongest energy is located before first indication information corresponding to the target resource without the strongest energy, and a location order of the first indication information corresponding to the target resource without the strongest energy in CSI part 1 is the same as an order preconfigured by the network-side device, or a location order of the first indication information corresponding to the target resource without the strongest energy in CSI part 1 is the same as a configuration order of the target resource without the strongest energy.

In a possible implementation, the sending module 403 is further configured to set the bit sequence corresponding to the first indication information about the quantity $M_{v,i}$ of the basis vectors of the $i^{th}$ target resource to an all-zero sequence, where in a case that the $i^{th}$ target resource is a target resource without strongest energy, the all-zero sequence indicates that the $i^{th}$ target resource is not recommended.

In a possible implementation, in a case that the $i^{th}$ target resource is not recommended, CSI part 2 does not include at least one of the following information corresponding to the $i^{th}$ target resource:

amplitude information and phase information of a non-zero coefficient;
spatial domain information, where the spatial domain information is indication information of a spatial beam corresponding to the $i^{th}$ target resource;
frequency domain information, where the frequency domain information is delay indication information corresponding to the $i^{th}$ target resource in delay domain;
time domain information, where the time domain information is Doppler indication information corresponding to the $i^{th}$ target resource in time domain or Doppler domain; and
non-zero coefficient indication information.

In a possible implementation, the sending, by the sending module 403, the first PMI parameter of the $i^{th}$ target resource further includes:

determining locations of the $M_{v,i}$ basis vectors of the $i^{th}$ target resource based on the variation range of the basis vectors of the $i^{th}$ target resource, where the plurality of target resources correspond to a same variation range of basis vectors, or different target resources among the plurality of target resources correspond to different variation ranges of basis vectors; and
sending third indication information for indicating the locations of the $M_{v,i}$ basis vectors of the $i^{th}$ target resource.

In a possible implementation, in a case that the variation range of the basis vectors is a continuous window, a length of a window corresponding to the $i^{th}$ target resource is determined by the maximum quantity $M_{max,i}$ of the basis vectors configured for or associated with the $i^{th}$ target resource; and/or in a case that the variation range of the basis vectors is a continuous window, a start position of a window corresponding to the $i^{th}$ target resource is determined by the maximum quantity $M_{max,i}$ of the basis vectors configured for or associated with the $i^{th}$ target resource.

In a possible implementation, the sending, by the sending module 403, third indication information includes: sending CSI part 2, where CSI part 2 includes the third indication information.

In a possible implementation, a length of a bit sequence corresponding to the third indication information about the locations of the $M_{v,i}$ basis vectors of the $i^{th}$ target resource is determined by the quantity $M_{v,i}$ of the basis vectors of the $i^{th}$ target resource and the variation range of the basis vectors of the $i^{th}$ target resource.

In a possible implementation, the sending, by the sending module 403, the first PMI parameter of the $i^{th}$ target resource further includes:

sending a non-zero coefficient indication corresponding to the $i^{th}$ target resource, where a length of a bit sequence corresponding to the non-zero coefficient indication is $2vLM_{v,i}$, $v$ is a rank of a codebook, and L is one of the following or a product of any two thereof: a quantity of spatial beams, a quantity of delays in delay domain, and a quantity of Doppler in Doppler domain.

In a possible implementation, the quantity $M_{v,i}$ of the basis vectors includes at least one of the following: a quantity of spatial domain basis vectors; a quantity of frequency domain basis vectors; and a quantity of time domain basis vectors.

In a possible implementation, the obtaining, by the first obtaining module 402, a quantity of quantization bits for an amplitude of a coefficient of an $i^{th}$ target resource includes: for transmission layer $l$, obtaining the quantity of the quantization bits for the amplitude of the coefficient of the $i^{th}$ target resource based on "a quantity of quantization bits for an amplitude of a coefficient corresponding to a first target resource is a high bit quantity and a quantity of quantization bits for an amplitude of a coefficient corresponding to another target resource is a low bit quantity"; and

the obtaining, by the first obtaining module 402, a quantization table for an amplitude of a coefficient of an $i^{th}$ target resource includes: for transmission layer $l$, obtaining the quantization table for the amplitude of the coefficient of the $i^{th}$ target resource based on "a quantization bit table of the amplitude of the coefficient corresponding to the first target resource is a high-precision quantization table and a quantization table for the amplitude of the coefficient corresponding to the other target resource is a low-precision quantization table", where the first target resource is a target resource associated with a coefficient with a strongest amplitude among all coefficients associated with the plurality of target resources, the other target resource is a target resource other than the first target resource among the plurality of target resources, $l$ = 0, 1, ..., v, and v is an allowed transmission rank.

In a possible implementation, the obtaining, by the first obtaining module 402, a quantity of quantization bits for an amplitude of a coefficient of an $i^{th}$ target resource includes: obtaining the quantity of the quantization bits for the amplitude of the coefficient of the $i^{th}$ target resource based on "a quantity of quantization bits for an amplitude of a coefficient associated with a target layer among transmission layers is a high bit quantity and a quantity of quantization bits for an amplitude of a coefficient associated with a layer other than the target layer among the transmission layers is a low bit quantity", where the target layer includes one of the following: a layer with strongest energy, a layer with a largest sum of amplitudes of coefficients, a layer indicated by a layer indicator, and a predetermined layer among all layers; and

the obtaining, by the first obtaining module 402, a quantization table for an amplitude of a coefficient of an $i^{th}$ target resource includes: obtaining the quantization table for the amplitude of the coefficient of the $i^{th}$ target resource based on "a quantization bit table of the amplitude of the coefficient associated with the target layer is a high-precision quantization table and a quantization table for the amplitude of the coefficient associated with the other layer is a low-precision quantization table".

In a possible implementation, the obtaining, by the first obtaining module 402, a quantity of quantization bits for a phase of a coefficient of an $i^{th}$ target resource includes: for transmission layer $l$, obtaining the quantity of the quantization bits for the phase of the coefficient of the $i^{th}$ target resource based on "a quantity of quantization bits for a phase of a coefficient corresponding to a second target resource is a high bit quantity and a quantity of quantization bits for a phase of a coefficient corresponding to another target resource is a low bit quantity"; and

the obtaining, by the first obtaining module 402, a quantization table for a phase of a coefficient of an $i^{th}$ target resource includes: for transmission layer $l$, obtaining the quantization table for the phase of the coefficient of the $i^{th}$ target resource based on "a quantization bit table of the phase of the coefficient corresponding to the second target resource is a high-precision quantization table and a quantization table for the phase of the coefficient corresponding to the other target resource is a low-precision quantization table", where the second target resource is a target resource associated with a coefficient with a strongest amplitude among all coefficients associated with the plurality of target resources, the other target resource is a target resource other than the second target resource among the plurality of target resources, $l$ = 0, 1, ..., v, and v is an allowed transmission rank.

In a possible implementation, the obtaining, by the first obtaining module 402, a quantity of quantization bits for a phase of a coefficient of an $i^{th}$ target resource includes: obtaining the quantity of the quantization bits for the phase of the coefficient of the $i^{th}$ target resource based on "a quantity of quantization bits for a phase of a coefficient associated with a target layer among transmission layers is a high bit quantity and a quantity of quantization bits for a phase of a coefficient associated with a layer other than the target layer among the transmission layers is a low bit quantity", where the target layer includes one of the following: a layer corresponding to a coefficient with strongest energy or a strongest amplitude, a layer with a largest sum of amplitudes of coefficients, a layer indicated by a layer indicator, and a predetermined layer among all layers; and

the obtaining, by the first obtaining module 402, a quantization table for a phase of a coefficient of an $i^{th}$ target resource includes: obtaining the quantization table for the phase of the coefficient of the $i^{th}$ target resource based on "a quantization bit table of the phase of the coefficient associated with the target layer is a high-precision quantization table and a quantization table for the phase of the coefficient associated with the other layer is a low-precision quantization table".

The PMI parameter feedback apparatus for joint transmission in this embodiment of this application may be an electronic device, for example, an electronic device with an operating system, or may be a component in an electronic device, for example, an integrated circuit or a chip. The electronic device may be a terminal, or may be other devices than a terminal. For example, the terminal may include but is not limited to the foregoing illustrated type of the terminal 11. The other devices may be a server, a network attached storage (Network Attached Storage, NAS), and the like. This is not specifically limited in this embodiment of this application.

The PMI parameter feedback apparatus for joint transmission according to this embodiment of this application can implement each process implemented in the method embodiment in FIG. 2, with the same technical effect achieved. To avoid repetition, details are not described herein again.

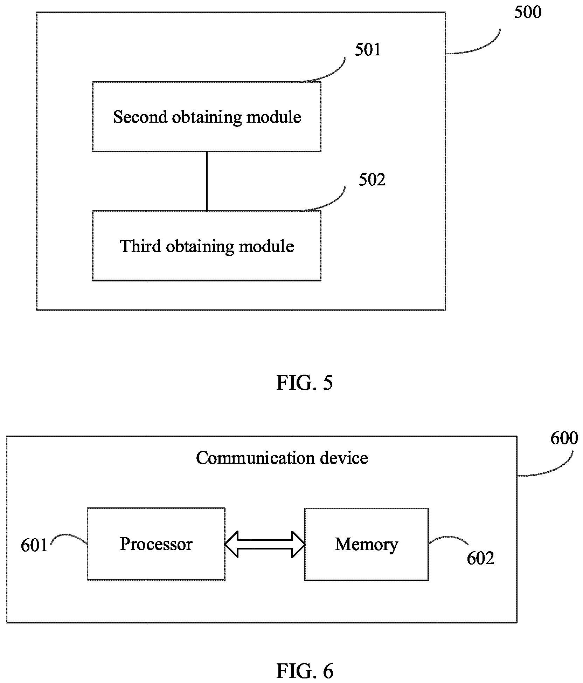

FIG. 5 is a schematic diagram of a structure of a PMI obtaining apparatus for joint transmission according to an embodiment of this application. As shown in FIG. 5, the apparatus 500 mainly includes a second obtaining module 501 and a third obtaining module 502.

In this embodiment of this application, the second obtaining module 501 is configured to obtain a first PMI parameter that is of an $i^{th}$ target resource and that is sent by a terminal, where i = 1, 2, ..., N, N is an integer less than or equal to M, M is a quantity of target resources configured by the network-side device for the terminal, and the first PMI parameter includes at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and the third obtaining module 502 is configured to obtain a PMI for joint transmission based on the first PMI parameter.

In a possible implementation, the quantity $M_{v,i}$ of the basis vectors is not greater than a maximum quantity $M_{max,i}$ of basis vectors configured or associated by the network-side device, where $M_{max,i}$ is a maximum quantity of basis vectors configured for or associated with the $i^{th}$ target resource.

In a possible implementation, the apparatus further includes a configuration module, configured to:

uniformly configure or associate one maximum quantity of basis vectors for the plurality of target resources; or configure or associate an independent maximum quantity of basis vectors for each target resource.

In a possible implementation, the obtaining, by the second obtaining module 501, a PMI for joint transmission based on the first PMI parameter includes:

obtaining CSI part 1 sent by the terminal, where CSI part 1 includes first indication information about the quantity $M_{v,i}$ of the basis vectors of the $i^{th}$ target resource;
determining, based on the first indication information, the quantity $M_{v,i}$ of the basis vectors of the $i^{th}$ target resource included in CSI part 2;
obtaining a second PMI parameter of the $i^{th}$ target resource in CSI part 2 based on the quantity $M_{v,i}$ of the basis vectors of the $i^{th}$ target resource included in CSI part 2; and
obtaining, based on the first PMI parameter and the second PMI parameter, a PMI corresponding to the $i^{th}$ target resource.

The PMI obtaining apparatus for joint transmission according to this embodiment of this application can implement each process implemented in the method embodiment in FIG. 3, with the same technical effect achieved. To avoid repetition, details are not described herein again.

Optionally, as shown in FIG. 6, an embodiment of this application further provides a communication device 600, including a processor 601 and a memory 602. The memory 602 stores a program or instructions capable of running on the processor 601. For example, when the communication device 600 is a terminal, and the program or instructions are executed by the processor 601, the steps of the foregoing embodiment of the PMI parameter feedback method for joint transmission are implemented, with the same technical effect achieved. When the communication device 600 is a network-side device, and the program or instructions are executed by the processor 601, the steps of the foregoing embodiment of the PMI obtaining method for joint transmission are implemented, with the same technical effect achieved. To avoid repetition, details are not described herein again.

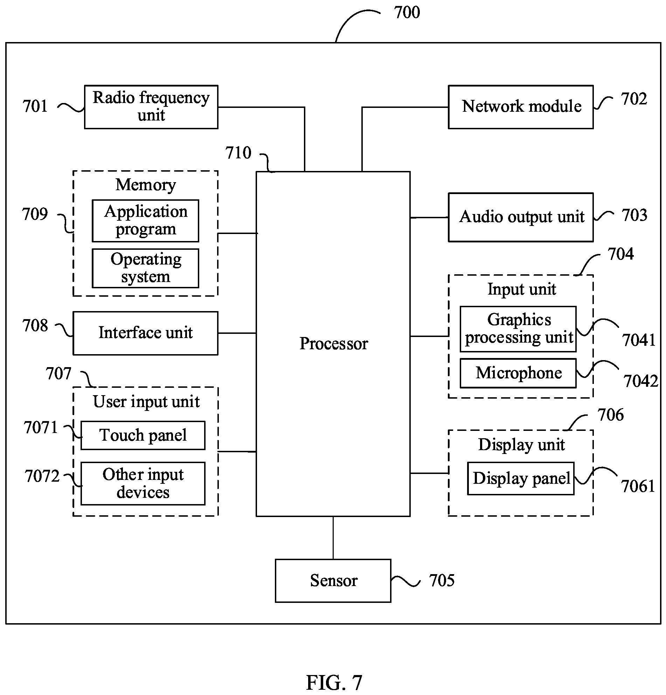

An embodiment of this application further provides a terminal, including a processor and a communication interface. The processor is configured to implement the steps of the foregoing PMI parameter feedback method for joint transmission. The communication interface is configured to communicate with an external device. The terminal embodiment corresponds to the foregoing terminal-side method embodiment, and each implementation process and implementation of the foregoing method embodiment can be applied to the terminal embodiment, with the same technical effect achieved. Specifically, FIG. 7 is a schematic diagram of a hardware structure of a terminal for implementing an embodiment of this application.

The terminal 700 includes but is not limited to at least some components such as a radio frequency unit 701, a network module 702, an audio output unit 703, an input unit 704, a sensor 705, a display unit 706, a user input unit 707, an interface unit 708, a memory 709, and a processor 710.

A person skilled in the art may understand that the terminal 700 may further include a power supply (for example, a battery) supplying power to all components. The power supply may be logically connected to the processor 710 through a power management system. In this way, functions such as charge management, discharge management, and power consumption management are implemented by using the power management system. The terminal structure shown in FIG. 7 does not constitute a limitation on the terminal. The terminal may include more or fewer components than those shown in the figure, or some components are combined, or component arrangements are different. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a still picture or video obtained by an image capture apparatus (such as a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or a power button), a trackball, a mouse, and a joystick. Details are not described herein again.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may primarily include a first storage area for storing programs or instructions and a second storage area for storing data. The first storage area may store an operating system, an application program or instructions required by at least one function (such as an audio play function and an image play function), and the like. In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch Link DRAM, SLDRAM), and a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to the operating system, a user interface, an application program, and the like. The modem processor mainly processes a wireless communication signal. For example, the modem processor is a baseband processor. It may be understood that the modem processor may alternatively be not integrated in the processor 710.

The processor 710 is configured to:

perform channel measurement based on M target resources configured by a network-side device, where the target resources include measurement resources or a measurement resource group, and M is an integer greater than 1; and obtain a first PMI parameter of an i$^{th}$ target resource based on a channel measurement result of the i$^{th}$ target resource among the plurality of target resources, where i = 1, 2, ..., N, N is an integer less than or equal to M, and the first PMI parameter includes at least one of the following: a quantity $M_{V,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and the radio frequency unit 701 is configured to send the first PMI parameter of the i$^{th}$ target resource.

An embodiment of this application further provides a network-side device, including a processor and a communication interface. The processor is configured to implement the steps of the foregoing embodiment of the PMI obtaining method for joint transmission. The communication interface is configured to communicate with an external device. The network-side device embodiment corresponds to the foregoing method embodiment of the network-side device, and each implementation process and implementation of the foregoing method embodiment can be applied to the network-side device embodiment, with the same technical effect achieved.

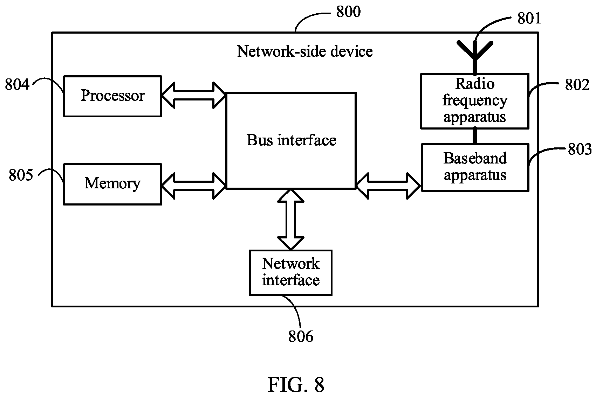

Specifically, an embodiment of this application further provides a network-side device. As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes to-be-sent information, and sends the information to the radio frequency apparatus 802; and the radio frequency apparatus 802 processes the received information and then sends the information out by using the antenna 801.

The method performed by the network-side device in the foregoing embodiment may be implemented in the baseband apparatus 803. The baseband apparatus 803 includes a baseband processor.

The baseband apparatus 803 may include, for example, at least one baseband unit, where a plurality of chips are disposed on the baseband unit. As shown in FIG. 8, one of the chips is, for example, the baseband processor, connected to the memory 805 by using a bus interface, to invoke a program in the memory 805 to perform the operation of the network-side device shown in the foregoing method embodiment.

The network-side device may further include a network interface 806, where the interface is, for example, a common public radio interface (common public radio interface, CPRI).

Specifically, the network-side device 800 in this embodiment of this application further includes a program or instructions stored in the memory 805 and capable of running on the processor 804. When the processor 804 invokes the program or instructions in the memory 805, the method performed by each module shown in FIG. 5 is performed, with the same technical effect achieved. To avoid repetition, details are not described herein again.

An embodiment of this application further provides a readable storage medium. The readable storage medium stores a program or instructions. When the program or instructions are executed by a processor, each process of the foregoing embodiment of the PMI parameter feedback method for joint transmission is implemented, or each process of the foregoing embodiment of the PMI obtaining method for joint transmission is implemented, with the same technical effect achieved. To avoid repetition, details are not described herein again.

The processor is a processor in the terminal in the foregoing embodiment. The readable storage medium includes a computer-readable storage medium, such as a computer read-only memory ROM, a random access memory RAM, a magnetic disk, or an optical disc.

In addition, an embodiment of this application provides a chip. The chip includes a processor and a communication interface. The communication interface is coupled to the processor. The processor is configured to run a program or instructions to implement each process of the foregoing embodiment of the PMI parameter feedback method for joint transmission or implement each process of the foregoing embodiment of the PMI obtaining method for joint transmission, with the same technical effect achieved. To avoid repetition, details are not described herein again.

It should be understood that the chip provided in this embodiment of this application may also be referred to as a system-level chip, a system chip, a chip system, a system-on-chip, or the like.

In addition, an embodiment of this application provides a computer program or program product. The computer program or program product is stored in a storage medium. The computer program or program product is executed by at least one processor to implement each process of the foregoing embodiment of the PMI parameter feedback method for joint transmission or implement each process of the foregoing embodiment of the PMI obtaining method for joint transmission, with the same technical effect achieved. To avoid repetition, details are not described herein again.

An embodiment of this application further provides a PMI parameter feedback system for joint transmission, including a terminal and a network-side device. The terminal may be configured to perform the steps of the foregoing PMI parameter feedback method for joint transmission. The network-side device may be configured to perform the steps of the PMI obtaining method for joint transmission.

It should be noted that in this specification, the term "comprise", "include", or any of their variants are intended to cover a non-exclusive inclusion, so that a process, a method, an article, or an apparatus that includes a list of elements not only includes those elements but also includes other elements that are not expressly listed, or further includes elements inherent to such process, method, article, or apparatus. In absence of more constraints, an element preceded by "includes a ..." does not preclude existence of other identical elements in the process, method, article, or apparatus that includes the element. In addition, it should be noted that the scope of the method and apparatus in the implementations of this application is not limited to performing the functions in an order shown or discussed, and may further include performing the functions in a substantially simultaneous manner or in a reverse order depending on the functions used. For example, the method described may be performed in an order different from that described, and various steps may be added, omitted, or combined. In addition, features described with reference to some examples may be combined in other examples.

According to the foregoing description of the implementations, a person skilled in the art may clearly understand that the methods in the foregoing embodiments may be implemented by using software in combination with a necessary general hardware platform, and certainly may alternatively be implemented by using hardware. However, in most cases, the former is a preferred implementation. Based on such an understanding, the technical solutions of this application essentially or the part contributing to the prior art may be implemented in a form of a computer software product. The computer software product is stored in a storage medium (such as a ROM/RAM, a magnetic disk, or an optical disc), and includes several instructions for instructing a terminal (which may be a mobile phone, a computer, a server, an air conditioner, a network device, or the like) to perform the methods described in the embodiments of this application.

The foregoing describes the embodiments of this application with reference to the accompanying drawings. However, this application is not limited to the foregoing specific embodiments. The foregoing specific embodiments are merely illustrative rather than restrictive. Inspired by this application, a person of ordinary skill in the art may develop many other manners without departing from principles of this application and the protection scope of the claims, and all such manners fall within the protection scope of this application.

**Claims**

1.  A precoding matrix indicator PMI parameter feedback method for joint transmission, comprising:

    performing, by a terminal, channel measurement based on M target resources configured by a network-side device, wherein the target resources comprise measurement resources or a measurement resource group, and M is an integer greater than 1;

    obtaining, by the terminal, a first PMI parameter of an $i^{th}$ target resource based on a channel measurement result of the $i^{th}$ target resource among the M target resources, wherein i = 1, 2, ..., N, N is an integer less than or equal to M, and the first PMI parameter comprises at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and

    sending, by the terminal, the first PMI parameter of the $i^{th}$ target resource.

2.  The method according to claim 1, wherein the quantity $M_{v,i}$ of the basis vectors is not greater than a maximum quantity $M_{max,i}$ of basis vectors configured or associated by the network-side device, wherein $M_{max,i}$ is a maximum quantity of basis vectors configured for or associated with the $i^{th}$ target resource.

3.  The method according to claim 2, wherein

    the network-side device uniformly configures or associates one maximum quantity of basis vectors for the plurality of target resources; or

    the network-side device configures or associates an independent maximum quantity of basis vectors for each target resource.

4.  The method according to claim 1, wherein the sending, by the terminal, the first PMI parameter of the $i^{th}$ target resource comprises:

    sending, by the terminal, channel state information CSI, wherein CSI part 1 comprises first indication information, and the first indication information is used to indicate the quantity $M_{v,i}$ of the basis vectors of the $i^{th}$ target resource.

5.  The method according to claim 4, wherein a length of a bit sequence corresponding to the first indication information about the quantity $M_{v,i}$ of the basis vectors is $\left\lceil log_2 M_{max,i} \right\rceil$, wherein $M_{max,i}$ is a maximum quantity of basis vectors configured for or associated with the $i^{th}$ target resource.

6.  The method according to claim 5, wherein CSI part 1 further comprises second indication information, and the second indication information is used to indicate the N target resources.

7.  The method according to claim 6, wherein before the sending, by the terminal, CSI, the method further comprises:

    performing, by the terminal, a zero-padding operation on CSI part 1 by using a zero sequence, wherein a length of CSI part 1 after the zero-padding operation is a predetermined value.

8.  The method according to claim 4, wherein a length of a bit sequence corresponding to the indication information about the quantity $M_{v,i}$ of the basis vectors is $\left\lceil log_2(M_{max,i} + 1) \right\rceil$, wherein $M_{max,i}$ is a maximum quantity of basis vectors configured for or associated with the $i^{th}$ target resource.

9. The method according to claim 8, wherein before the sending, by the terminal, channel state information CSI, the method further comprises:
in a case that the terminal does not recommend the i$^{th}$ target resource, setting, by the terminal, the bit sequence corresponding to the first indication information about the quantity $M_{v,i}$ of the basis vectors of the i$^{th}$ target resource $M_{v,i}$ to an all-zero sequence.

10. The method according to claim 5 or 8, wherein a location order of first indication information about quantities $M_{v,i}$ of basis vectors of the N target resources in CSI part 1 is the same as an order preconfigured by the network-side device, or a location order of first indication information about quantities $M_{v,i}$ of basis vectors of the N target resources in CSI part 1 is the same as a configuration order of the plurality of target resources.

11. The method according to claim 4, wherein a length of a bit sequence corresponding to the first indication information about the quantity $M_{v,i}$ of the basis vectors is $\lceil log_2 M_{max,i} \rceil$ or $\lceil log_2(M_{max,i} + 1) \rceil$, wherein $M_{max,i}$ is a maximum quantity of basis vectors configured for or associated with the i$^{th}$ target resource.

12. The method according to claim 11, wherein in a case that the i$^{th}$ target resource is a target resource with strongest energy among the N target resources, the length of the bit sequence corresponding to the first indication information about the quantity $M_{v,i}$ of the basis vectors is $\lceil log_2 M_{max,i} \rceil$, or in a case that the i$^{th}$ target resource is a target resource without strongest energy among the N target resources, the length of the bit sequence corresponding to the first indication information about the quantity $M_{v,i}$ of the basis vectors is $\lceil log_2(M_{max,i} + 1) \rceil$.

13. The method according to claim 12, wherein in CSI part 1, first indication information corresponding to the target resource with the strongest energy is located before first indication information corresponding to the target resource without the strongest energy, and a location order of the first indication information corresponding to the target resource without the strongest energy in CSI part 1 is the same as an order preconfigured by the network-side device, or a location order of the first indication information corresponding to the target resource without the strongest energy in CSI part 1 is the same as a configuration order of the target resource without the strongest energy.

14. The method according to claim 12, wherein before the sending, by the terminal, channel state information CSI, the method comprises:
setting, by the terminal, the bit sequence corresponding to the first indication information about the quantity $M_{v,i}$ of the basis vectors of the i$^{th}$ target resource to an all-zero sequence, wherein in a case that the i$^{th}$ target resource is a target resource without strongest energy, the all-zero sequence indicates that the terminal does not recommend the i$^{th}$ target resource.

15. The method according to claim 9 or 14, wherein in a case that the terminal does not recommend the i$^{th}$ target resource, CSI part 2 does not comprise at least one of the following information corresponding to the i$^{th}$ target resource:

amplitude information and phase information of a non-zero coefficient;
spatial domain information, wherein the spatial domain information is indication information of a spatial beam corresponding to the i$^{th}$ target resource;
frequency domain information, wherein the frequency domain information is delay indication information corresponding to the i$^{th}$ target resource in delay domain;
time domain information, wherein the time domain information is Doppler indication information corresponding to the i$^{th}$ target resource in time domain or Doppler domain; and
non-zero coefficient indication information.

16. The method according to any one of claims 2 to 15, wherein the sending, by the terminal, the first PMI parameter of the i$^{th}$ target resource further comprises:

determining, by the terminal, locations of the $M_{v,i}$ basis vectors of the i$^{th}$ target resource based on the variation range of the basis vectors of the i$^{th}$ target resource, wherein the plurality of target resources correspond to a same variation range of basis vectors, or different target resources among the plurality of target resources correspond to different variation ranges of basis vectors; and

sending, by the terminal, third indication information, wherein the third indication information is used to indicate the locations of the $M_{v,i}$ basis vectors of the $i^{th}$ target resource.

17. The method according to claim 16, wherein

in a case that the variation range of the basis vectors is a continuous window, a length of a window corresponding to the $i^{th}$ target resource is determined by the maximum quantity $M_{max,i}$ of the basis vectors configured for or associated with the $i^{th}$ target resource; and/or

in a case that the variation range of the basis vectors is a continuous window, a start position of a window corresponding to the $i^{th}$ target resource is determined by the maximum quantity $M_{max,i}$ of the basis vectors configured for or associated with the $i^{th}$ target resource.

18. The method according to claim 16, wherein the sending, by the terminal, third indication information comprises: sending, by the terminal, CSI part 2, wherein CSI part 2 comprises the third indication information.

19. The method according to claim 18, wherein a length of a bit sequence corresponding to the third indication information about the locations of the $M_{v,i}$ basis vectors of the $i^{th}$ target resource is determined by the quantity $M_{v,i}$ of the basis vectors of the $i^{th}$ target resource and the variation range of the basis vectors of the $i^{th}$ target resource.

20. The method according to any one of claims 2 to 19, wherein the sending, by the terminal, the first PMI parameter of the $i^{th}$ target resource further comprises:
sending, by the terminal, a non-zero coefficient indication corresponding to the $i^{th}$ target resource, wherein a length of a bit sequence corresponding to the non-zero coefficient indication is $2vM_{v,i}$, $v$ is a rank of a codebook, and L is one of the following or a product of any two thereof: a quantity of spatial beams, a quantity of delays in delay domain, and a quantity of Doppler in Doppler domain.

21. The method according to any one of claims 2 to 20, wherein the quantity $M_{v,i}$ of the basis vectors comprises at least one of the following:

a quantity of spatial domain basis vectors;
a quantity of frequency domain basis vectors; and
a quantity of time domain basis vectors.

22. The method according to any one of claims 1 to 21, wherein

the obtaining, by the terminal, a quantity of quantization bits for an amplitude of a coefficient of an $i^{th}$ target resource based on a channel measurement result of the $i^{th}$ target resource among the plurality of target resources comprises: for transmission layer $l$, obtaining the quantity of the quantization bits for the amplitude of the coefficient of the $i^{th}$ target resource based on "a quantity of quantization bits for an amplitude of a coefficient corresponding to a first target resource is a high bit quantity and a quantity of quantization bits for an amplitude of a coefficient corresponding to another target resource is a low bit quantity"; and
the obtaining, by the terminal, a quantization table for an amplitude of a coefficient of an $i^{th}$ target resource based on a channel measurement result of the $i^{th}$ target resource among the plurality of target resources comprises: for transmission layer $l$, obtaining the quantization table for the amplitude of the coefficient of the $i^{th}$ target resource based on "a quantization bit table of the amplitude of the coefficient corresponding to the first target resource is a high-precision quantization table and a quantization table for the amplitude of the coefficient corresponding to the other target resource is a low-precision quantization table", wherein
the first target resource is a target resource associated with a coefficient with a strongest amplitude among all coefficients associated with the plurality of target resources, the other target resource is a target resource other than the first target resource among the plurality of target resources, $l = 0, 1, ..., v$, and v is an allowed transmission rank.

23. The method according to any one of claims 1 to 21, wherein

the obtaining, by the terminal, a quantity of quantization bits for an amplitude of a coefficient of an $i^{th}$ target resource based on a channel measurement result of the $i^{th}$ target resource among the plurality of target resources comprises: obtaining the quantity of the quantization bits for the amplitude of the coefficient of the $i^{th}$ target resource based on "a quantity of quantization bits for an amplitude of a coefficient associated with a target layer among transmission layers is a high bit quantity and a quantity of quantization bits for an amplitude of a coefficient associated with a layer other than the target layer among the transmission layers is a low bit quantity", wherein the target layer comprises one of the following: a layer with strongest energy, a layer with a largest sum of amplitudes of coefficients, a layer indicated by a layer indicator, and a predetermined layer among all layers; and

the obtaining, by the terminal, a quantization table for an amplitude of a coefficient of an $i^{th}$ target resource based on a channel measurement result of the $i^{th}$ target resource among the plurality of target resources comprises: obtaining the quantization table for the amplitude of the coefficient of the $i^{th}$ target resource based on "a quantization bit table of the amplitude of the coefficient associated with the target layer is a high-precision quantization table and a quantization table for the amplitude of the coefficient associated with the other layer is a low-precision quantization table".

24. The method according to any one of claims 1 to 21, wherein

the obtaining, by the terminal, a quantity of quantization bits for a phase of a coefficient of an $i^{th}$ target resource based on a channel measurement result of the $i^{th}$ target resource among the plurality of target resources comprises: for transmission layer $l$, obtaining the quantity of the quantization bits for the phase of the coefficient of the $i^{th}$ target resource based on "a quantity of quantization bits for a phase of a coefficient corresponding to a second target resource is a high bit quantity and a quantity of quantization bits for a phase of a coefficient corresponding to another target resource is a low bit quantity"; and

the obtaining, by the terminal, a quantization table for a phase of a coefficient of an $i^{th}$ target resource based on a channel measurement result of the $i^{th}$ target resource among the plurality of target resources comprises: for transmission layer $l$, obtaining the quantization table for the phase of the coefficient of the $i^{th}$ target resource based on "a quantization bit table of the phase of the coefficient corresponding to the second target resource is a high-precision quantization table and a quantization table for the phase of the coefficient corresponding to the other target resource is a low-precision quantization table", wherein

the second target resource is a target resource associated with a coefficient with a strongest amplitude among all coefficients associated with the plurality of target resources, the other target resource is a target resource other than the second target resource among the plurality of target resources, $l = 0, 1, ..., v$, and v is an allowed transmission rank.

25. The method according to any one of claims 1 to 21, wherein

the obtaining, by the terminal, a quantity of quantization bits for a phase of a coefficient of an $i^{th}$ target resource based on a channel measurement result of the $i^{th}$ target resource among the plurality of target resources comprises: obtaining the quantity of the quantization bits for the phase of the coefficient of the $i^{th}$ target resource based on "a quantity of quantization bits for a phase of a coefficient associated with a target layer among transmission layers is a high bit quantity and a quantity of quantization bits for a phase of a coefficient associated with a layer other than the target layer among the transmission layers is a low bit quantity", wherein the target layer comprises one of the following: a layer corresponding to a coefficient with strongest energy or a strongest amplitude, a layer with a largest sum of amplitudes of coefficients, a layer indicated by a layer indicator, and a predetermined layer among all layers; and

the obtaining, by the terminal, a quantization table for a phase of a coefficient of an $i^{th}$ target resource based on a channel measurement result of the $i^{th}$ target resource among the plurality of target resources comprises: obtaining the quantization table for the phase of the coefficient of the $i^{th}$ target resource based on "a quantization bit table of the phase of the coefficient associated with the target layer is a high-precision quantization table and a quantization table for the phase of the coefficient associated with the other layer is a low-precision quantization table".

26. A PMI obtaining method for joint transmission, comprising:

obtaining, by a network-side device, a first PMI parameter that is of an $i^{th}$ target resource and that is sent by a terminal, wherein i = 1, 2, ..., N, N is an integer less than or equal to M, M is a quantity of target resources configured by the network-side device for the terminal, and the first PMI parameter comprises at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and

obtaining, by the network-side device, a PMI for joint transmission based on the first PMI parameter.

27. The method according to claim 26, wherein the quantity $M_{v,i}$ of the basis vectors is not greater than a maximum quantity $M_{max,i}$ of basis vectors configured or associated by the network-side device, wherein $M_{max,i}$ is a maximum quantity of basis vectors configured for or associated with the $i^{th}$ target resource.

28. The method according to claim 27, wherein the method further comprises:

uniformly configuring or associating, by the network-side device, one maximum quantity of basis vectors for the plurality of target resources; or
configuring or associating, by the network-side device, an independent maximum quantity of basis vectors for each target resource.

29. The method according to any one of claims 26 to 28, wherein the obtaining, by the network-side device, a PMI for joint transmission based on the first PMI parameter comprises:

obtaining, by the network-side device, CSI part 1 sent by the terminal, wherein CSI part 1 comprises first indication information used to indicate the quantity $M_{v,i}$ of the basis vectors of the $i^{th}$ target resource;
determining, by the network-side device based on the first indication information, the quantity $M_{v,i}$ of the basis vectors of the $i^{th}$ target resource comprised in CSI part 2;
obtaining, by the network-side device, a second PMI parameter of the $i^{th}$ target resource in CSI part 2 based on the quantity $M_{v,i}$ of the basis vectors of the $i^{th}$ target resource comprised in CSI part 2; and
obtaining, by the network-side device based on the first PMI parameter and the second PMI parameter, a PMI corresponding to the $i^{th}$ target resource.

30. A PMI parameter feedback apparatus for joint transmission, comprising:

a measurement module, configured to perform channel measurement based on M target resources configured by a network-side device, wherein the target resources comprise measurement resources or a measurement resource group, and M is an integer greater than 1;
a first obtaining module, configured to obtain a first PMI parameter of an $i^{th}$ target resource based on a channel measurement result of the $i^{th}$ target resource among the plurality of target resources, wherein i = 1, 2, ..., N, N is an integer less than or equal to M, and the first PMI parameter comprises at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and
a sending module, configured to send the first PMI parameter of the $i^{th}$ target resource.

31. The apparatus according to claim 30, wherein the sending, by the sending module, the first PMI parameter of the $i^{th}$ target resource comprises:
sending channel state information CSI, wherein CSI part 1 comprises first indication information, and the first indication information is used to indicate the quantity $M_{v,i}$ of the basis vectors of the $i^{th}$ target resource.

32. The apparatus according to claim 31, wherein the sending module is further configured to set a bit sequence corresponding to the first indication information about the quantity $M_{v,i}$ of the basis vectors of the $i^{th}$ target resource to an all-zero sequence in a case that the $i^{th}$ target resource is not recommended.

33. The apparatus according to claim 30, wherein the sending, by the sending module, the first PMI parameter of the $i^{th}$ target resource further comprises:

determining locations of the $M_{v,i}$ basis vectors of the $i^{th}$ target resource based on the variation range of the basis vectors of the $i^{th}$ target resource, wherein the plurality of target resources correspond to a same variation range of basis vectors, or different target resources among the plurality of target resources correspond to different variation ranges of basis vectors; and
sending third indication information, wherein the third indication information is used to indicate the locations of the $M_{v,i}$ basis vectors of the $i^{th}$ target resource.

34. The apparatus according to any one of claims 30 to 33, wherein the sending, by the sending module, the first PMI parameter of the $i^{th}$ target resource further comprises:
sending a non-zero coefficient indication corresponding to the $i^{th}$ target resource, wherein a length of a bit sequence corresponding to the non-zero coefficient indication is $2vM_{v,i}$, $v$ is a rank of a codebook, and L is one of the following or a product of any two thereof: a quantity of spatial beams, a quantity of delays in delay domain, and a quantity of Doppler in Doppler domain.

35. The apparatus according to any one of claims 30 to 34, wherein

the obtaining, by the first obtaining module, a quantity of quantization bits for an amplitude of a coefficient of an $i^{th}$ target resource comprises: for transmission layer $l$, obtaining the quantity of the quantization bits for the amplitude of the coefficient of the $i^{th}$ target resource based on "a quantity of quantization bits for an amplitude of a coefficient corresponding to a first target resource is a high bit quantity and a quantity of quantization bits for an amplitude of a coefficient corresponding to another target resource is a low bit quantity"; and
the obtaining, by the first obtaining module, a quantization table for an amplitude of a coefficient of an $i^{th}$ target resource comprises: for transmission layer $l$, obtaining the quantization table for the amplitude of the coefficient of the $i^{th}$ target resource based on "a quantization bit table of the amplitude of the coefficient corresponding to the first target resource is a high-precision quantization table and a quantization table for the amplitude of the coefficient corresponding to the other target resource is a low-precision quantization table", wherein
the first target resource is a target resource associated with a coefficient with a strongest amplitude among all coefficients associated with the plurality of target resources, the other target resource is a target resource other than the first target resource among the plurality of target resources, $l$ = 0, 1, ..., v, and v is an allowed transmission rank.

36. The apparatus according to any one of claims 30 to 34, wherein

the obtaining, by the first obtaining module, a quantity of quantization bits for an amplitude of a coefficient of an $i^{th}$ target resource comprises: obtaining the quantity of the quantization bits for the amplitude of the coefficient of the $i^{th}$ target resource based on "a quantity of quantization bits for an amplitude of a coefficient associated with a target layer among transmission layers is a high bit quantity and a quantity of quantization bits for an amplitude of a coefficient associated with a layer other than the target layer among the transmission layers is a low bit quantity", wherein the target layer comprises one of the following: a layer with strongest energy, a layer with a largest sum of amplitudes of coefficients, a layer indicated by a layer indicator, and a predetermined layer among all layers; and
the obtaining, by the first obtaining module, a quantization table for an amplitude of a coefficient of an $i^{th}$ target resource comprises: obtaining the quantization table for the amplitude of the coefficient of the $i^{th}$ target resource based on "a quantization bit table of the amplitude of the coefficient associated with the target layer is a high-precision quantization table and a quantization table for the amplitude of the coefficient associated with the other layer is a low-precision quantization table".

37. The apparatus according to any one of claims 30 to 34, wherein

the obtaining, by the first obtaining module, a quantity of quantization bits for a phase of a coefficient of an $i^{th}$ target resource comprises: for transmission layer $l$, obtaining the quantity of the quantization bits for the phase of the coefficient of the $i^{th}$ target resource based on "a quantity of quantization bits for a phase of a coefficient corresponding to a second target resource is a high bit quantity and a quantity of quantization bits for a phase of a coefficient corresponding to another target resource is a low bit quantity"; and
the obtaining, by the first obtaining module, a quantization table for a phase of a coefficient of an $i^{th}$ target resource comprises: for transmission layer $l$, obtaining the quantization table for the phase of the coefficient of the $i^{th}$ target resource based on "a quantization bit table of the phase of the coefficient corresponding to the second target resource is a high-precision quantization table and a quantization table for the phase of the coefficient corresponding to the other target resource is a low-precision quantization table", wherein
the second target resource is a target resource associated with a coefficient with a strongest amplitude among all coefficients associated with the plurality of target resources, the other target resource is a target resource other than the second target resource among the plurality of target resources, $l$ = 0, 1, ..., v, and v is an allowed transmission rank.

38. The apparatus according to any one of claims 30 to 34, wherein

the obtaining, by the first obtaining module, a quantity of quantization bits for a phase of a coefficient of an $i^{th}$ target resource comprises: obtaining the quantity of the quantization bits for the phase of the coefficient of the $i^{th}$ target resource based on "a quantity of quantization bits for a phase of a coefficient associated with a target layer among transmission layers is a high bit quantity and a quantity of quantization bits for a phase of a coefficient associated with a layer other than the target layer among the transmission layers is a low bit quantity", wherein the target layer comprises one of the following: a layer corresponding to a coefficient with strongest energy or a strongest amplitude, a layer with a largest sum of amplitudes of coefficients, a layer indicated by a layer indicator, and a predetermined layer among all layers; and

the obtaining, by the first obtaining module, a quantization table for a phase of a coefficient of an $i^{th}$ target resource comprises: obtaining the quantization table for the phase of the coefficient of the $i^{th}$ target resource based on "a quantization bit table of the phase of the coefficient associated with the target layer is a high-precision quantization table and a quantization table for the phase of the coefficient associated with the other layer is a low-precision quantization table".

39. A PMI obtaining apparatus for joint transmission, comprising:

a second obtaining module, configured to obtain a first PMI parameter that is of an $i^{th}$ target resource and that is sent by a terminal, wherein i = 1, 2, ..., N, N is an integer less than or equal to M, M is a quantity of target resources configured by the network-side device for the terminal, and the first PMI parameter comprises at least one of the following: a quantity $M_{v,i}$ of basis vectors, a variation range of basis vectors, a quantity of quantization bits for an amplitude of a coefficient, a quantization table for an amplitude of a coefficient, a quantity of quantization bits for a phase of a coefficient, and a quantization table for a phase of a coefficient; and

a third obtaining module, configured to obtain a PMI for joint transmission based on the first PMI parameter.

40. A terminal, comprising a processor and a memory, wherein the memory stores a program or instructions capable of running on the processor, and when the program or instructions are executed by the processor, the steps of the PMI parameter feedback method for joint transmission according to any one of claims 1 to 25 are implemented.

41. A network-side device, comprising a processor and a memory, wherein the memory stores a program or instructions capable of running on the processor, and when the program or instructions are executed by the processor, the steps of the PMI obtaining method for joint transmission according to any one of claims 26 to 29 are implemented.

42. A readable storage medium, wherein the readable storage medium stores a program or instructions, and when the program or instructions are executed by a processor, the steps of the PMI parameter feedback method for joint transmission according to any one of claims 1 to 25 are implemented, or the steps of the PMI obtaining method for joint transmission according to any one of claims 26 to 39 are implemented.

12

Network-side
device

11

11

Terminal

Terminal

FIG. 1

200

S210

A terminal performs channel measurement based on M target resources configured by a network-side device, where the target resources include measurement resources or a measurement resource group

S212

The terminal obtains a first PMI parameter of an $i^{th}$ target resource based on a channel measurement result of the $i^{th}$ target resource among the M target resources

S214

The terminal sends the first PMI parameter of the $i^{th}$ target resource

FIG. 2

300

S310

A network-side device obtains a first PMI parameter that is of an $i^{th}$ target resource and that is sent by a terminal, where i = 1, 2, ..., N, N is an integer less than or equal to M, and M is a quantity of target resources configured by the network-side device for the terminal

S312

The network-side device obtains a PMI for joint transmission based on the first PMI parameter

FIG. 3

400

401

Measurement module

402

First obtaining module

403

Sending module

FIG. 4

FIG. 5

FIG. 6

FIG. 7

FIG. 8

## INTERNATIONAL SEARCH REPORT

International application No.

**PCT/CN2023/100352**

| A. | CLASSIFICATION OF SUBJECT MATTER |
|---|---|

H04W 24/10(2009.01)i

According to International Patent Classification (IPC) or to both national classification and IPC

| B. | FIELDS SEARCHED |
|---|---|

Minimum documentation searched (classification system followed by classification symbols)

IPC: H04W, H04L

Documentation searched other than minimum documentation to the extent that such documents are included in the fields searched

Electronic data base consulted during the international search (name of data base and, where practicable, search terms used)

CNTXT, DWPI, ENTXT, VEN, WPABS, 3GPP: 预编码矩阵指示, PMI, 参数, 反馈, 多个, 基矢量, 基向量, 联合传输, 系数幅度, 系数相位, 信道测量, 资源, 协同多点传输, CoMP, parameter?, feedback, multiple, basis Vector, joint transmission, coefficient Magnitude, coefficient Phase, channel measurement, resource

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | US 2021273709 A1 (ZTE CORP.) 02 September 2021 (2021-09-02) description, paragraphs 0003-0094 | 1-42 |
| Y | US 2021258058 A1 (ZTE CORP.) 19 August 2021 (2021-08-19) description, paragraphs 0005-0025 | 1-42 |
| A | CN 110098852 A (SAMSUNG ELECTRONICS CO., LTD.) 06 August 2019 (2019-08-06) entire document | 1-42 |
| A | US 2013258886 A1 (TEXAS INSTRUMENTS INC.) 03 October 2013 (2013-10-03) entire document | 1-42 |
| A | WO 2020143613 A1 (CHINA MOBILE COMMUNICATIONS GROUP CO., LTD. et al.) 16 July 2020 (2020-07-16) entire document | 1-42 |

☐ Further documents are listed in the continuation of Box C.   ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| **19 September 2023** | **27 September 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

| | International application No. |
|---|---|
| | **PCT/CN2023/100352** |

| Patent document cited in search report | | | Publication date (day/month/year) | Patent family member(s) | | | Publication date (day/month/year) |
|---|---|---|---|---|---|---|---|
| US | 2021273709 | A1 | 02 September 2021 | EP | 3813415 | A1 | 28 April 2021 |
| | | | | WO | 2020001132 | A1 | 02 January 2020 |
| | | | | CN | 110635883 | A | 31 December 2019 |
| US | 2021258058 | A1 | 19 August 2021 | AU | 2019370538 | A1 | 20 May 2021 |
| | | | | JP | 2022504137 | A | 13 January 2022 |
| | | | | KR | 20210083251 | A | 06 July 2021 |
| | | | | WO | 2020088640 | A1 | 07 May 2020 |
| | | | | EP | 3876433 | A1 | 08 September 2021 |
| | | | | CN | 110535513 | A | 03 December 2019 |
| | | | | SG | 11202103259 | A1 | 29 April 2021 |
| | | | | VN | 79643 | A | 26 July 2021 |
| CN | 110098852 | A | 06 August 2019 | US | 2020359250 | A1 | 12 November 2020 |
| | | | | KR | 20150009538 | A | 26 January 2015 |
| | | | | US | 2013301448 | A1 | 14 November 2013 |
| | | | | KR | 20200090924 | A | 29 July 2020 |
| | | | | EP | 2662987 | A2 | 13 November 2013 |
| | | | | EP | 4160928 | A1 | 05 April 2023 |
| | | | | KR | 20210041132 | A | 14 April 2021 |
| | | | | WO | 2013169026 | A1 | 14 November 2013 |
| | | | | CN | 104272606 | A | 07 January 2015 |
| US | 2013258886 | A1 | 03 October 2013 | US | 2016352487 | A1 | 01 December 2016 |
| | | | | US | 2016352398 | A1 | 01 December 2016 |
| WO | 2020143613 | A1 | 16 July 2020 | CN | 111416644 | A | 14 July 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210681219